# FASCICULE DE BREVET EUROPEEN

(11) **EP 3 606 774 B1**
(45) Date de publication et mention de la délivrance du brevet: **18.08.2021**
(21) Numéro de dépôt: 18722667.5
(22) Date de dépôt: 30.03.2018
(51) Int. Cl.: B60H 1/00, B60H 1/32

(54) **CIRCUIT DE CLIMATISATION INVERSIBLE INDIRECT DE VEHICULE AUTOMOBILE ET PROCEDE DE FONCTIONNEMENT CORRESPONDANT**
INDIREKTER REVERSIBLER KLIMATISIERUNGSKREISLAUF FÜR EIN KRAFTFAHRZEUG UND ZUGEHÖRIGES BETRIEBSVERFAHREN
INDIRECT REVERSIBLE AIR-CONDITIONING CIRCUIT FOR A MOTOR VEHICLE AND CORRESPONDING OPERATING METHOD

(30) Priorité: 05.04.2017 FR 1752950
(43) Date de publication de la demande: 12.02.2020
(73) Titulaire: Valeo Systemes Thermiques, 78322 Le Mesnil Saint-Denis (FR)
(72) Inventeur: BENOUALI, Jugurtha, 78322 Le Mesnil Saint-Denis Cedex (FR)
(74) Mandataire: Tran, Chi-Hai
(86) Numéro de dépôt international: PCT/FR2018/050806
(87) Numéro de publication internationale: WO 2018/185412

(56) Documents cités:
- EP-A1- 2 517 906
- EP-A1- 2 933 586
- DE-A1-102016 110 957
- DE-T5-112014 003 888
- US-A1- 2004 079 102

## Description

L'invention se rapporte au domaine des véhicules automobiles et plus particulièrement à un circuit de climatisation de véhicule automobile et son procédé de fonctionnement.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est-à-dire qu'il peut absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un circuit de climatisation indirect. On entend par indirect ici que le circuit de climatisation comporte deux boucles de circulation de deux fluides distincts (comme par exemple un fluide réfrigérant et de l'eau glycolée) afin d'effectuer les différents échanges de chaleur.

Le circuit de climatisation comprend ainsi une première boucle de fluide réfrigérant dans laquelle circule un fluide réfrigérant, une deuxième boucle de fluide caloporteur dans laquelle circule un fluide caloporteur, et un échangeur de chaleur bifluide agencé conjointement sur la première boucle de fluide réfrigérant et sur la deuxième boucle de fluide caloporteur, de façon à permettre les échanges de chaleur entre lesdites boucles. Un tel circuit de climatisation avec une deuxième boucle de fluide caloporteur est connue du document EP 2 933 586 A1.

Un tel circuit de climatisation permet une utilisation selon différents modes de fonctionnement cependant dans le cadre d'un véhicule électrique ou hybride, la gestion thermique d'éléments tels que les batteries et composants électroniques est réalisée par une boucle de gestion thermique secondaire. Cette configuration augmente les coûts de production et de la chaleur générée par ces éléments est perdue alors qu'elle pourrait être réutilisée pour chauffer l'habitacle et ainsi diminuer la consommation électrique du mode pompe à chaleur du circuit de climatisation.

Un des buts de la présente invention est donc de remédier au moins partiellement aux inconvénients de l'art antérieur et de proposer un circuit de climatisation amélioré permettant également la gestion thermique d'éléments tels que les batteries, les composants électroniques et le moteur électrique notamment au sein d'un véhicule électrique ou hybride.

La présente invention concerne donc un circuit de climatisation indirect pour véhicule automobile comportant :
- une première boucle de fluide réfrigérant dans laquelle circule un fluide réfrigérant, ladite première boucle de fluide réfrigérant comportant dans le sens de circulation du fluide réfrigérant :
   ∘ un compresseur,
   ∘ un premier échangeur de chaleur bifluide,
   ∘ un premier dispositif de détente,
   ∘ un premier échangeur de chaleur étant destiné à être traversé par un flux d'air intérieur au véhicule automobile,
   ∘ un deuxième dispositif de détente,
   ∘ un deuxième échangeur de chaleur étant destiné à être traversé par un flux d'air extérieur au véhicule automobile, et
   ∘ une première conduite de contournement du deuxième échangeur de chaleur comportant une première vanne d'arrêt,
- une deuxième boucle de fluide caloporteur dans laquelle circule un fluide caloporteur,
- le premier échangeur de chaleur bifluide étant agencé conjointement sur la première boucle de fluide réfrigérant en aval du compresseur, entre ledit compresseur et le premier dispositif de détente, et sur la deuxième boucle de fluide caloporteur, de façon à permettre les échanges de chaleur entre la première boucle de fluide réfrigérant et la deuxième boucle de fluide caractérisé en ce que le circuit de climatisation indirect (1) comprend : caloporteur,
- un premier échangeur de chaleur interne, permettant un échange de chaleur entre le fluide réfrigérant à haute pression en sortie du premier échangeur de chaleur bifluide et le fluide réfrigérant à basse pression en sortie du deuxième échangeur de chaleur ou de la première conduite de contournement,
- un deuxième échangeur de chaleur interne permettant un échange de chaleur entre le fluide réfrigérant à haute pression en sortie du premier échangeur de chaleur interne et le fluide réfrigérant à basse pression circulant dans la première conduite de contournement,
- une deuxième conduite de contournement du premier dispositif de détente et du premier échangeur de chaleur, ladite deuxième conduite de contournement comportant un troisième dispositif de détente disposé en amont d'un deuxième échangeur de chaleur bifluide également agencé conjointement sur une boucle de gestion thermique secondaire.

Selon un aspect de l'invention, la deuxième conduite de contournement est connectée d'une part en amont du premier dispositif de détente et d'autre part sur la conduite de contournement, en amont de la première vanne d'arrêt et du deuxième échangeur de chaleur interne.

Selon un autre aspect de l'invention, la deuxième conduite de contournement est connectée d'une part en amont du premier dispositif de détente et d'autre part sur la conduite de contournement, en amont du deuxième échangeur de chaleur et en aval de la première vanne d'arrêt.

Selon un autre aspect de l'invention, la deuxième conduite de contournement est connectée d'une part en amont du premier dispositif de détente et d'autre part en aval du deuxième dispositif de détente, entre ledit deuxième dispositif de détente et le premier échangeur de chaleur interne.

Selon un autre aspect de l'invention, la première boucle de fluide réfrigérant comporte une conduite de dérivation connectée d'une part sur la première conduite de contournement, en amont de la vanne d'arrêt du deuxième échangeur de chaleur et d'autre part en amont du troisième dispositif de détente entre ledit troisième dispositif de détente et une deuxième vanne d'arrêt, ladite conduite de dérivation comportant une troisième vanne d'arrêt.

Selon un autre aspect de l'invention, la deuxième boucle de fluide caloporteur comporte :
∘ le premier échangeur de chaleur bifluide,
∘ une première conduite de circulation de fluide caloporteur comportant un troisième échangeur de chaleur destiné à être traversé par un flux d'air intérieur au véhicule automobile, et reliant un premier point de jonction disposé en aval du premier échangeur de chaleur bifluide et un deuxième point de jonction disposé en amont dudit premier échangeur de chaleur bifluide,
∘ une deuxième conduite de circulation de fluide caloporteur comportant un quatrième échangeur de chaleur destiné à être traversé par un flux d'air extérieur au véhicule automobile, et reliant le premier point de jonction disposé en aval du premier échangeur de chaleur bifluide et le deuxième point de jonction disposé en amont dudit premier échangeur de chaleur bifluide, et
∘ une pompe disposée en aval ou en amont du premier échangeur de chaleur bifluide, entre le premier point de jonction et le deuxième point de jonction.

La présente invention concerne également un procédé de fonctionnement d'un circuit de climatisation inversible indirect selon un mode de refroidissement secondaire parallèle dans lequel :
∘ le fluide réfrigérant circule dans le compresseur où ledit fluide réfrigérant passe à haute pression et circule successivement dans le premier échangeur de chaleur bifluide, le premier échangeur de chaleur interne, le deuxième échangeur de chaleur interne :
   ▪ une première partie du fluide réfrigérant passe dans la deuxième conduite de contournement, passe dans le troisième dispositif de détente où ledit fluide réfrigérant passe à basse pression, ledit fluide réfrigérant à basse pression circule ensuite dans le deuxième échangeur de chaleur bifluide avant de rejoindre le fluide réfrigérant à basse pression issu du premier échangeur de chaleur en amont du premier échangeur de chaleur interne,
   ▪ une deuxième partie du fluide réfrigérant passe dans le premier dispositif de détente où ledit fluide réfrigérant passe à basse pression, ledit fluide réfrigérant à basse pression circule ensuite successivement dans le premier échangeur de chaleur, la première conduite de contournement où il passe dans le deuxième échangeur de chaleur interne, et ensuite dans le premier échangeur de chaleur interne avant de retourner au compresseur,
∘ le fluide caloporteur en sortie du premier échangeur de chaleur bifluide circule dans le quatrième échangeur de chaleur de la deuxième conduite de circulation.

La présente invention concerne également un procédé de fonctionnement d'un circuit de climatisation inversible indirect selon un mode de refroidissement secondaire strict dans lequel :
∘ le fluide réfrigérant circule dans le compresseur où ledit fluide réfrigérant passe à haute pression et circule successivement dans le premier échangeur de chaleur bifluide, le premier échangeur de chaleur interne, le deuxième échangeur de chaleur interne, le fluide réfrigérant passe ensuite dans la deuxième conduite de contournement, passe dans le troisième dispositif de détente où ledit fluide réfrigérant passe à basse pression, ledit fluide réfrigérant à basse pression circule ensuite dans le deuxième échangeur de chaleur bifluide,
∘ le fluide caloporteur en sortie du premier échangeur de chaleur bifluide circule dans le quatrième échangeur de chaleur de la deuxième conduite de circulation.

La présente invention concerne également un procédé de fonctionnement d'un circuit de climatisation inversible indirect selon un mode pompe à chaleur secondaire parallèle dans lequel :
∘ le fluide réfrigérant circule dans le compresseur où ledit fluide réfrigérant passe à haute pression et circule successivement dans le premier échangeur de chaleur bifluide, le premier échangeur de chaleur interne, le deuxième échangeur de chaleur interne :
   ▪ une première partie du fluide réfrigérant passe par la deuxième conduite de contournement en traversant le troisième dispositif de détente où le fluide réfrigérant passe à basse pression, le deuxième échangeur de chaleur bifluide avant de rejoindre le fluide réfrigérant issu du deuxième échangeur de chaleur en amont du premier échangeur de chaleur interne,
   ▪ une deuxième partie du fluide réfrigérant passe par le premier dispositif de détente où ledit fluide réfrigérant passe à une pression intermédiaire, ledit fluide réfrigérant circule ensuite successivement dans le premier échangeur de chaleur, le deuxième dispositif de détente où ledit fluide réfrigérant passe à basse pression, le deuxième échangeur de chaleur,
   ▪ le fluide réfrigérant à basse pression traverse ensuite le premier échangeur de chaleur interne avant de retourner au compresseur,
∘ le fluide caloporteur en sortie du premier échangeur de chaleur bifluide circule uniquement dans le troisième échangeur de chaleur de la première conduite de circulation.

La présente invention concerne également un procédé de fonctionnement d'un circuit de climatisation inversible indirect selon un mode pompe à chaleur secondaire strict dans lequel :
∘ le fluide réfrigérant circule dans le compresseur où ledit fluide réfrigérant passe à haute pression et circule successivement dans le premier échangeur de chaleur bifluide, le premier échangeur de chaleur interne, le deuxième échangeur de chaleur interne, le premier dispositif de détente où ledit fluide réfrigérant passe à une pression intermédiaire, ledit fluide réfrigérant circule ensuite successivement dans le premier échangeur de chaleur, la première conduite de contournement, la conduite de dérivation, le troisième dispositif de détente où ledit fluide réfrigérant passe à basse pression, le deuxième échangeur de chaleur bifluide, le fluide réfrigérant à basse pression traverse ensuite le premier échangeur de chaleur interne avant de retourner au compresseur,
∘ le fluide caloporteur en sortie du premier échangeur de chaleur bifluide circule uniquement dans le troisième échangeur de chaleur de la première conduite de circulation.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation inversible indirect selon un premier mode de réalisation,
- la figure 2 montre une représentation schématique d'un circuit de climatisation inversible indirect selon un deuxième mode de réalisation,
- la figure 3 montre une représentation schématique d'un circuit de climatisation inversible indirect selon un troisième mode de réalisation,
- la figure 4 montre une représentation schématique d'un circuit de climatisation inversible indirect selon un quatrième mode de réalisation,
- la figure 5 montre un dispositif de détente selon un mode de réalisation alternatif,
- la figure 6 montre une représentation schématique de la deuxième boucle de fluide caloporteur du circuit de climatisation inversible indirect des figures 1 à 4, selon un mode de réalisation alternatif,
- la figure 7a montre le circuit de climatisation inversible indirect des figures 1 à 3 selon un mode de refroidissement,
- la figure 7b montre le circuit de climatisation inversible indirect de la figure 4 selon un mode de refroidissement,
- la figure 8a montre le circuit de climatisation inversible indirect de la figure 1 selon un mode de refroidissement secondaire parallèle,
- la figure 8b montre le circuit de climatisation inversible indirect de la figure 2 selon un mode de refroidissement secondaire parallèle,
- la figure 8c montre le circuit de climatisation inversible indirect de la figure 3 selon un mode de refroidissement secondaire parallèle,
- la figure 8d montre le circuit de climatisation inversible indirect de la figure 4 selon un mode de refroidissement secondaire parallèle,
- la figure 9a montre le circuit de climatisation inversible indirect de la figure 1 selon un mode de refroidissement secondaire strict,
- la figure 9b montre le circuit de climatisation inversible indirect de la figure 2 selon un mode de refroidissement secondaire strict,
- la figure 9c montre le circuit de climatisation inversible indirect de la figure 3 selon un mode de refroidissement secondaire strict,
- la figure 9d montre le circuit de climatisation inversible indirect de la figure 4 selon un mode de refroidissement secondaire strict,
- la figure 10a montre le circuit de climatisation inversible indirect des figures 1 à 3 selon un mode de pompe à chaleur,
- la figure 10b montre le circuit de climatisation inversible indirect de la figure 4 selon un mode de pompe à chaleur,
- la figure 11a montre le circuit de climatisation inversible indirect de la figure 2 selon un mode de pompe à chaleur secondaire parallèle,
- la figure 11b montre le circuit de climatisation inversible indirect de la figure 3 selon un mode de pompe à chaleur secondaire parallèle,
- la figure 11c montre le circuit de climatisation inversible indirect de la figure 4 selon un mode de pompe à chaleur secondaire parallèle, et
- la figure 12 montre le circuit de climatisation inversible indirect de la figure 4 selon un mode de pompe à chaleur secondaire strict,

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, comme par exemple premier élément ou deuxième élément ainsi que premier paramètre et second paramètre ou encore premier critère et deuxième critère, etc. Dans ce cas, il s'agit d'un simple indexage pour différencier et dénommer des éléments ou paramètres ou critères proches, mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

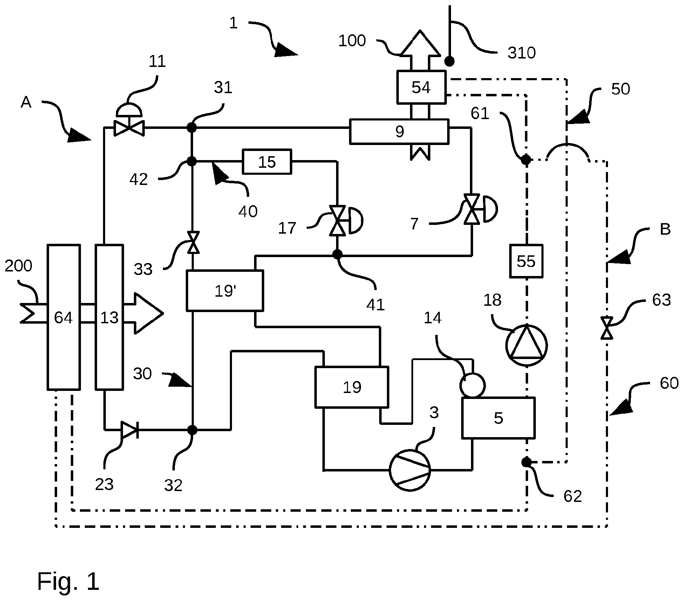

La figure 1 montre un circuit de climatisation indirect 1 pour véhicule automobile. Ce circuit de climatisation indirect 1 comporte notamment :
- une première boucle de fluide réfrigérant A dans laquelle circule un fluide réfrigérant,
- une deuxième boucle de fluide caloporteur B dans laquelle circule un fluide caloporteur, et
- un premier échangeur de chaleur bifluide 5 agencé conjointement sur la première boucle de fluide réfrigérant A et sur la deuxième boucle de fluide caloporteur B, de façon à permettre les échanges de chaleur entre ladite première boucle de fluide réfrigérant A et ladite deuxième boucle de fluide caloporteur B.

La première boucle de fluide réfrigérant A comporte plus particulièrement dans le sens de circulation du fluide réfrigérant :
∘ un compresseur 3,
∘ le premier échangeur de chaleur bifluide 5, disposé en aval dudit compresseur 3,
∘ un premier dispositif de détente 7,
∘ un premier échangeur de chaleur 9 étant destiné à être traversé par un flux d'air intérieur 100 au véhicule automobile,
∘ un deuxième dispositif de détente 11,
∘ un deuxième échangeur de chaleur 13 étant destiné à être traversé par un flux d'air extérieur 200 au véhicule automobile, et
∘ une première conduite de contournement 30 du deuxième échangeur de chaleur 13.

La première conduite de contournement 30 peut relier plus spécifiquement un premier point de raccordement 31 et un deuxième point de raccordement 32.

Le premier point de raccordement 31 est de préférence disposé, dans le sens de circulation du fluide réfrigérant, en aval du premier échangeur de chaleur 9, entre ledit premier échangeur de chaleur 9 et le deuxième échangeur de chaleur 13. Plus particulièrement, et comme illustré sur la figure 1, le premier point de raccordement 31 est disposé entre le premier échangeur de chaleur 9 et le deuxième dispositif de détente 11. Il est cependant tout à fait possible d'imaginer que le premier point de raccordement 31 soit disposé entre le deuxième dispositif de détente 11 et le deuxième échangeur de chaleur 13 du moment que le fluide réfrigérant a la possibilité de contourner ledit deuxième dispositif de détente 11 ou de le traverser sans subir de perte de pression.

Le deuxième point de raccordement 32 est quant à lui de préférence disposé en aval du deuxième échangeur de chaleur 13, entre ledit échangeur de chaleur 13 et le compresseur 3.

Afin de contrôler le passage du fluide réfrigérant au sein de la première conduite de contournement 30 ou non, cette dernière comporte une première vanne d'arrêt 33. Pour que le fluide réfrigérant ne traverse pas le deuxième échangeur de chaleur 13, le deuxième dispositif de détente 11 peut notamment comporter une fonction d'arrêt, c'est-à-dire qu'il est apte à bloquer le flux de fluide réfrigérant lorsqu'il est fermé. Une alternative peut être de disposer une vanne d'arrêt entre le deuxième dispositif de détente 11 et le premier point de raccordement 31.

Une autre alternative (non représentée) peut également être de disposer une vanne trois-voies au niveau du premier point de raccordement 31.

La première boucle de fluide réfrigérant A peut également comporter un clapet antiretour 23 disposé en aval du deuxième échangeur de chaleur 13, entre ledit deuxième échangeur de chaleur 13 et le deuxième point de raccordement 32 afin d'éviter que du fluide réfrigérant issu de la première conduite de contournement 30 ne reflux vers le deuxième échangeur de chaleur 13.

Par vanne d'arrêt, clapet antiretour, vanne trois-voies ou dispositif de détente avec fonction d'arrêt, on entend ici des éléments mécaniques ou électromécaniques pouvant être pilotés par une unité de commande électronique embarquée dans le véhicule automobile.

La première boucle de fluide réfrigérant A comporte également un premier échangeur de chaleur interne 19 (IHX pour « internal heat exchanger ») permettant un échange de chaleur entre le fluide réfrigérant à haute pression en sortie du premier échangeur de chaleur bifluide 5 et le fluide réfrigérant à basse pression en sortie du deuxième échangeur de chaleur 13 ou de la première conduite de contournement 30. Ce premier échangeur de chaleur interne 19 comporte notamment une entrée et une sortie de fluide réfrigérant à basse pression en provenance du deuxième point de raccordement 32, ainsi qu'une entrée et une sortie de fluide réfrigérant à haute pression en provenance du premier échangeur de chaleur bifluide 5.

Par fluide réfrigérant à haute pression on entend par là un fluide réfrigérant ayant subi une augmentation de pression au niveau du compresseur 3 et qu'il n'a pas encore subi de perte de pression du fait d'un des dispositifs de détente. Par fluide réfrigérant à basse pression on entend par là un fluide réfrigérant ayant subi une perte de pression et à une pression proche de celle à l'entrée du compresseur 3.

La première boucle de fluide réfrigérant A comporte également un deuxième échangeur de chaleur interne 19' permettant un échange de chaleur entre le fluide réfrigérant à haute pression en sortie du premier échangeur de chaleur interne 19 et le fluide réfrigérant à basse pression circulant dans la première conduite de contournement 30. Ce deuxième échangeur de chaleur interne 19' comporte notamment une entrée et une sortie de fluide réfrigérant à basse pression en provenance du premier point de raccordement 31, ainsi qu'une entrée et une sortie de fluide réfrigérant à haute pression en provenance du premier échangeur de chaleur interne 19. Comme illustré sur la figure 1 le deuxième échangeur de chaleur interne 19' peut être disposé en aval de la première vanne d'arrêt 33.

Au moins un des premier 19 ou deuxième 19' échangeurs de chaleur interne peut être un échangeur de chaleur coaxial, c'est à dire comportant deux tubes coaxiaux et entre lesquels s'effectuent les échanges de chaleur.

De préférence, le premier échangeur de chaleur interne 19 peut être un échangeur de chaleur interne coaxial d'une longueur comprise entre 50 et 120mm alors que le deuxième échangeur de chaleur interne 19' peut être un échangeur de chaleur interne coaxial d'une longueur comprise entre 200 et 700mm.

La première boucle de fluide réfrigérant A peut également comporter une bouteille déshydratante 14 disposée en aval du premier échangeur de chaleur bifluide 5, plus précisément entre ledit premier échangeur de chaleur bifluide 5 et le premier échangeur de chaleur interne 19. Une telle bouteille déshydratante disposée sur le côté haute pression du circuit de climatisation, c'est-à-dire en aval de l'échangeur de chaleur bifluide 5 et en amont d'un dispositif de détente, a un encombrement moindre ainsi qu'un coût réduit par rapport à d'autres solutions de séparation de phase comme un accumulateur qui serait disposé du côté basse pression du circuit de climatisation, c'est-à-dire en amont du compresseur 3, notamment en amont du premier échangeur de chaleur interne 19.

Les premier 7 et deuxième 11 dispositifs de détente peuvent être des détendeurs électroniques, c'est à dire dont la pression du fluide réfrigérant en sortie est contrôlée par un actionneur qui fixe la section d'ouverture du dispositif de détente, fixant ainsi la pression du fluide en sortie. Un tel détendeur électronique est notamment apte à laisser passer le fluide réfrigérant sans perte de pression lorsque ledit dispositif de détente est ouvert complètement.

Selon un mode de réalisation préféré, le premier dispositif de détente 7 est un détendeur électronique pilotable par une unité de contrôle intégrée au véhicule et le deuxième dispositif de détente 11 est un détendeur thermostatique.

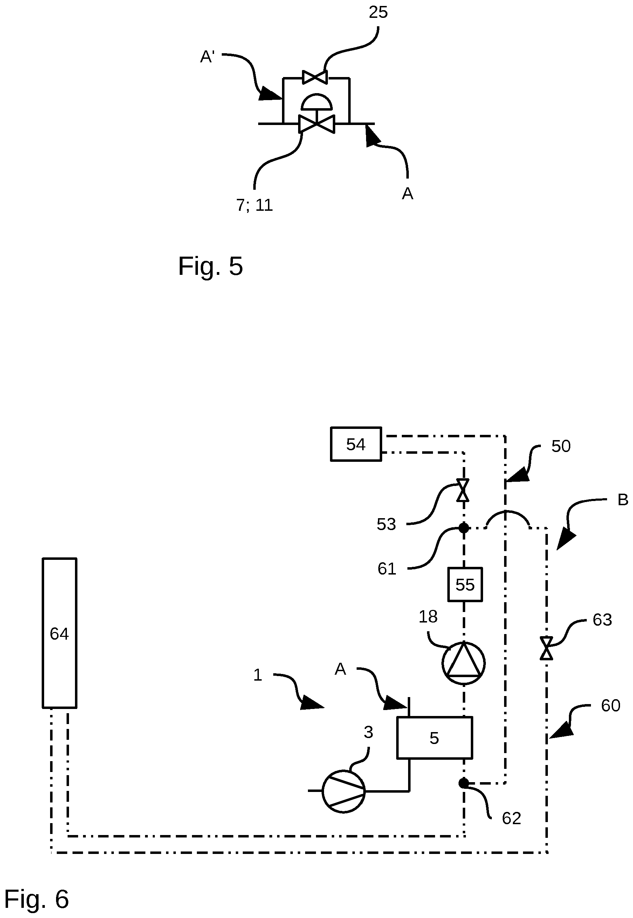

Le deuxième dispositif de détente 11 peut être notamment un détendeur thermostatique intégrant une fonction d'arrêt. Dans ce cas, lesdits premier 7 et deuxième 11 dispositifs de détente peuvent être contournés par une conduite de dérivation A', comportant notamment une vanne d'arrêt 25, comme illustré sur la figure 5. Cette conduite de dérivation A' permet au fluide réfrigérant de contourner lesdits premier 7 et deuxième 11 dispositifs de détente sans qu'il subisse une perte de pression. De préférence, au moins le deuxième dispositif de détente 11 est un détendeur thermostatique comportant une conduite de dérivation A'. Le premier dispositif de détente 7 peut également comporter une fonction d'arrêt ou alors comporter une vanne d'arrêt en aval afin de bloquer ou non le passage du fluide réfrigérant.

La première boucle de fluide réfrigérant A comporte également une deuxième conduite de contournement 40 du premier dispositif de détente 7 et du premier échangeur de chaleur 9. Cette deuxième conduite de contournement 40 comporte un troisième dispositif de détente 17 disposé en amont d'un deuxième échangeur de chaleur bifluide 15. Ce deuxième échangeur de chaleur bifluide 15 est également agencé conjointement sur une boucle de gestion thermique secondaire. La boucle de gestion thermique secondaire peut plus particulièrement être une boucle dans laquelle circule un fluide caloporteur et reliée à des échangeurs de chaleur ou plaques froides au niveau de batteries et/ou d'éléments électroniques.

Le troisième dispositif de détente 17 peut également comporter une fonction d'arrêt afin de permettre ou non au fluide réfrigérant de traverser la deuxième conduite de contournement 40. Une alternative est de disposer une vanne d'arrêt sur la deuxième conduite de contournement, en amont du troisième dispositif de détente 17.

La deuxième conduite de contournement 40 est connectée d'une part en amont du premier dispositif de détente 7. Cette connexion est réalisée au niveau d'un troisième point de raccordement 41 disposé en amont du premier dispositif de détente 7, entre le deuxième échangeur de chaleur 19' et ledit premier dispositif de détente 7.

Selon un premier mode de réalisation illustré à la figure 1, la deuxième conduite de contournement 40 est connectée d'autre part sur la première conduite de contournement 30, en amont de la première vanne d'arrêt 33 et du deuxième échangeur de chaleur interne 19'. Cette connexion est réalisée au niveau d'un quatrième point de raccordement 42 disposé entre le premier point de raccordement 31 et la première vanne d'arrêt 33 lorsque celle-ci est disposée en amont du deuxième échangeur de chaleur interne 19' comme sur la figure 1.

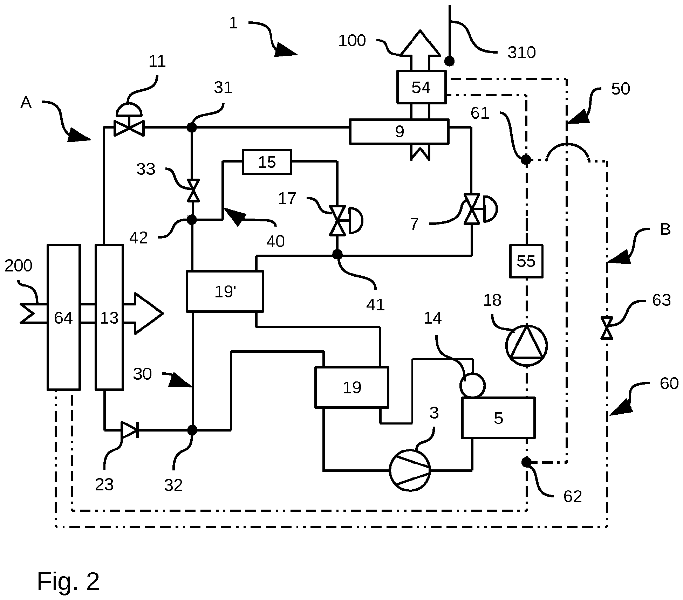

Selon un deuxième mode de réalisation illustré à la figure 2, la deuxième conduite de contournement 40 est connectée d'autre part sur la première conduite de contournement 30, en amont du deuxième échangeur de chaleur 19' et en aval de la première vanne d'arrêt 33. Le quatrième point de raccordement 42 est alors disposé entre la première vanne d'arrêt 33 et le deuxième échangeur de chaleur 19' lorsque la première vanne d'arrêt 33 est disposée en amont du deuxième échangeur de chaleur interne 19' comme sur la figure 2.

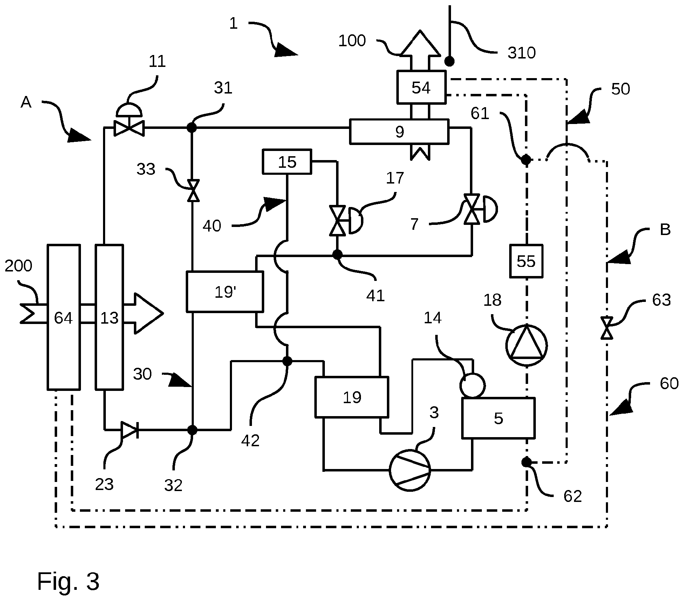

La figure 3 montre un troisième mode de réalisation où la deuxième conduite de contournement 40 est connectée d'une part en amont du premier dispositif de détente 7 et d'autre part en aval du deuxième dispositif de détente 19', entre ledit deuxième dispositif de détente 19' et le premier échangeur de chaleur interne 19. Le troisième point de raccordement 41 est ainsi également disposé en amont du premier dispositif de détente 7, entre le deuxième échangeur de chaleur 19' et ledit premier dispositif de détente 7.

Sur l'exemple de la figure 3, le quatrième point de raccordement 42 est disposé en aval de la première conduite de contournement 30, entre le deuxième point de raccordement 32 et le premier échangeur de chaleur interne 19. Cependant il est également tout à fait possible d'imaginer que le quatrième point de raccordement 42 soit disposé sur la première conduite de contournement 30, en aval de la première vanne d'arrêt 33 et du deuxième échangeur de chaleur interne 19'.

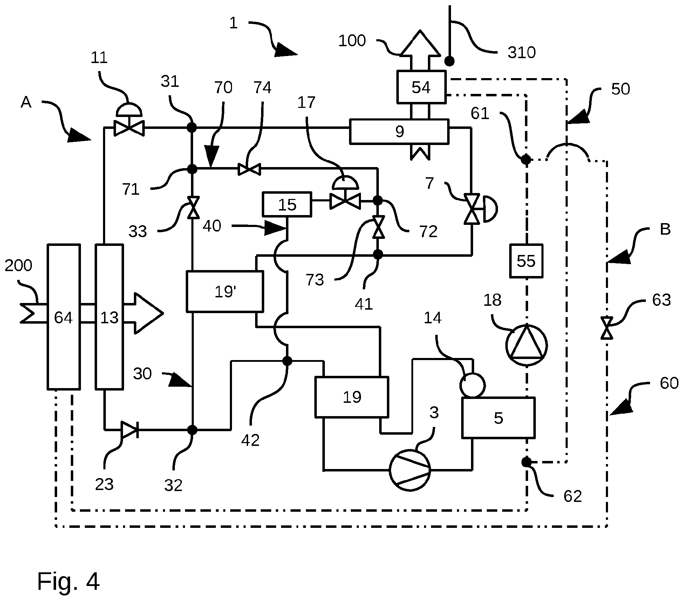

La figure 4 montre un quatrième mode de réalisation identique à celui de la figure 3 à la différence que la première boucle de fluide réfrigérant A comporte une conduite de dérivation 70 connectée d'une part sur la première conduite de contournement 30, en amont de la première vanne d'arrêt 33 et du deuxième échangeur de chaleur 19'. La connexion est réalisée par un cinquième point de raccordement 71 disposé entre le premier point de raccordement 31 et la première vanne d'arrêt 33 lorsque celle-ci est disposée en amont du deuxième échangeur de chaleur interne 19', comme illustré sur la figure 4.

Cette conduite de dérivation 70 est connectée d'autre part sur la deuxième conduite de contournement 40, en amont du troisième dispositif de détente 17 entre ledit troisième dispositif de détente 17 et une deuxième vanne d'arrêt 73. Cette deuxième vanne d'arrêt 73 est disposée entre le troisième point de raccordement 41 et le troisième dispositif de détente 17. La connexion de la conduite de dérivation 70 est alors réalisée au niveau d'un cinquième point de raccordement 72 disposé en aval de la deuxième vanne d'arrêt 73. Cette conduite de dérivation 70 comporte une troisième vanne d'arrêt 74 afin de laisser passer ou non le fluide réfrigérant en son sein.

La deuxième boucle de fluide caloporteur B peut comporter quant à elle :
∘ le premier échangeur de chaleur bifluide 5,
∘ une première conduite de circulation 50 de fluide caloporteur comportant un troisième échangeur de chaleur 54 destiné à être traversé par un flux d'air intérieur 100 au véhicule automobile, et reliant un premier point de jonction 61 disposé en aval du premier échangeur de chaleur bifluide 5 et un deuxième point de jonction 62 disposé en amont dudit premier échangeur de chaleur bifluide 5,
∘ une deuxième conduite de circulation 60 de fluide caloporteur comportant un quatrième échangeur de chaleur 64 destiné à être traversé par un flux d'air extérieur 200 au véhicule automobile, et reliant le premier point de jonction 61 disposé en aval du premier échangeur de chaleur bifluide 5 et le deuxième point de jonction 62 disposé en amont dudit premier échangeur de chaleur bifluide 5, et
∘ une pompe 18 disposée en aval ou en amont du premier échangeur de chaleur bifluide 5, entre le premier point de jonction 61 et le deuxième point de jonction 62.

Le circuit de climatisation inversible indirecte 1 comporte au sein de la deuxième boucle de fluide caloporteur B un dispositif de redirection du fluide caloporteur en provenance du premier échangeur de chaleur bifluide 5 vers la première conduite de circulation 50 et/ou vers la deuxième conduite de circulation 60.

Comme illustré sur les figures 1 à 4, ledit dispositif de redirection du fluide caloporteur en provenance du premier échangeur de chaleur bifluide 5 peut notamment comporter une quatrième vanne d'arrêt 63 disposée sur la deuxième conduite de circulation 60 afin de bloquer ou non le fluide caloporteur et de l'empêcher de circuler dans ladite deuxième conduite de circulation 60.

Le circuit de climatisation inversible indirect 1 peut également comporter un volet d'obstruction 310 du flux d'air intérieur 100 traversant le troisième échangeur de chaleur 54.

Ce mode de réalisation permet notamment de limiter le nombre de vannes sur la deuxième boucle de fluide caloporteur B et permet ainsi de limiter les coûts de production.

Selon un mode de réalisation alternatif illustré à la figure 6, le dispositif de redirection du fluide caloporteur en provenance du premier échangeur de chaleur bifluide 5 peut notamment comporter
- une quatrième vanne d'arrêt 63 disposée sur la deuxième conduite de circulation 60 afin de bloquer ou non le fluide caloporteur et de l'empêcher de circuler dans ladite deuxième conduite de circulation 60, et
- une cinquième vanne d'arrêt 53 disposée sur la première conduite de circulation 50 afin de bloquer ou non le fluide caloporteur et l'empêcher de circuler dans ladite première conduite de circulation 50.

La deuxième boucle de fluide caloporteur B peut également comporter un élément électrique chauffant 55 du fluide caloporteur. Ledit élément électrique chauffant 55 est notamment disposé, dans le sens de circulation du fluide caloporteur, en aval du premier échangeur de chaleur bifluide 5, entre ledit premier échangeur de chaleur bifluide 5 et le premier point de jonction 61.

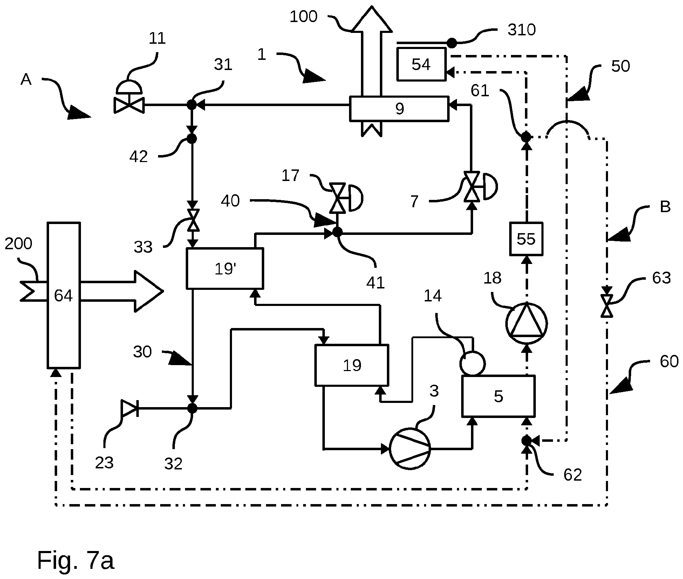

La présente invention concerne également un procédé de fonctionnement du circuit de climatisation inversible indirect 1 selon différents modes de fonctionnement illustrés aux figures 7a à 12. Sur ces figures 7a, à 12, seuls les éléments dans lesquels le fluide réfrigérant et/ou le fluide caloporteur circulent sont représentés. Le sens de circulation du fluide réfrigérant et/ou du fluide caloporteur est représenté par des flèches.

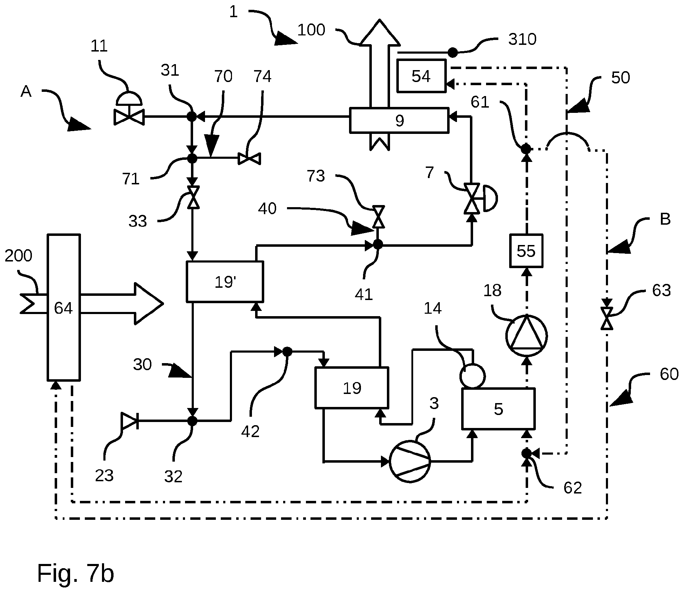

Les figures 7a et 7b montrent un mode de refroidissement dans lequel :
- le fluide réfrigérant circule dans le compresseur 3 où ledit fluide réfrigérant passe à haute pression et circule successivement dans le premier échangeur de chaleur bifluide 5, le premier échangeur de chaleur interne 19, le deuxième échangeur de chaleur interne 19', et le premier dispositif de détente 7 où ledit fluide réfrigérant passe à basse pression, ledit fluide réfrigérant à basse pression circule ensuite successivement dans le premier échangeur de chaleur 9, la première conduite de contournement 30 où il passe dans le deuxième échangeur de chaleur interne 19', et ensuite dans le premier échangeur de chaleur interne 19 avant de retourner au compresseur 3,
- le fluide caloporteur en sortie du premier échangeur de chaleur bifluide 5 circule dans le quatrième échangeur de chaleur 64 de la deuxième conduite de circulation 60.

La figure 7a montre ce mode de refroidissement lorsque le circuit de climatisation inversible indirect 1 est selon le premier mode de réalisation de la figure 1. Cependant, lorsque le circuit de climatisation inversible indirect 1 est selon le deuxième mode de réalisation de la figure 2 ou le troisième mode de réalisation de la figure 3, la circulation du fluide réfrigérant est la même à la différence de l'emplacement du quatrième point de raccordement 42.

La figure 7b montre quant à elle ce mode de refroidissement lorsque le circuit de climatisation inversible indirect 1 est selon le quatrième mode de réalisation de la figure 4.

Comme illustré par les figures 7a et 7b, une portion du fluide caloporteur en sortie du premier échangeur de chaleur bifluide 5 circule dans le troisième échangeur de chaleur 54 de la première conduite de circulation 50 et une autre portion du fluide caloporteur en sortie du premier échangeur de chaleur bifluide 5 circule dans le quatrième échangeur de chaleur 64 de la deuxième conduite de circulation 60. Le volet d'obstruction 310 est fermé de sorte à empêcher le flux d'air intérieur 100 de circuler dans le troisième échangeur de chaleur 54.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse le premier échangeur de chaleur bifluide 5 et subit une perte d'enthalpie du fait de son passage en phase liquide et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier échangeur de chaleur interne 19 où il perd de l'enthalpie. Cette enthalpie est transférée au fluide réfrigérant à basse pression issu de la première conduite de contournement 30.

Le fluide réfrigérant à haute pression passe ensuite dans le deuxième échangeur de chaleur interne 19' où il perd de nouveau de l'enthalpie. Cette enthalpie est transférée au fluide réfrigérant à basse pression traversant la première conduite de contournement 30.

Comme illustré sur la figure 7a, en sortie du deuxième échangeur de chaleur interne 19', le fluide réfrigérant ne circule pas dans la deuxième conduite de contournement 40 du fait que le troisième dispositif de détente 17 est fermé.

Si le circuit de climatisation inversible indirect 1 est selon le quatrième mode de réalisation comme illustré à la figure 7b, le fluide réfrigérant ne circule pas dans la deuxième conduite de contournement 40 du fait que la deuxième vanne d'arrêt 73 est fermée.

Le fluide réfrigérant à haute pression passe ensuite dans le premier dispositif de détente 7. Le fluide réfrigérant à haute pression subit une perte de pression isenthalpique et passe dans un état de mélange diphasique. Le fluide réfrigérant est maintenant dit à basse pression.

Le fluide réfrigérant à basse pression passe ensuite dans le premier échangeur de chaleur 9 où il gagne de l'enthalpie en refroidissant le flux d'air intérieur 100. Le fluide réfrigérant repasse à l'état gazeux. A la sortie du premier échangeur de chaleur 9, le fluide réfrigérant est redirigé vers la première conduite de contournement 30. Afin que le fluide réfrigérant ne passe pas dans le deuxième échangeur de chaleur 13, le deuxième dispositif de détente 11 est fermé.

Comme illustré sur la figure 7b, si une conduite de dérivation 70 est présente, le fluide réfrigérant ne traverse pas ladite conduite de dérivation 70 du fait que la troisième vanne d'arrêt 74 est fermée.

Le fluide réfrigérant à basse pression passe ensuite dans le deuxième échangeur de chaleur interne 19' où il gagne de l'enthalpie issue du fluide réfrigérant à haute pression traversant le deuxième échangeur de chaleur interne 19'.

Le fluide réfrigérant à basse pression passe ensuite dans le premier échangeur de chaleur interne 19 où il gagne de nouveau de l'enthalpie issue du fluide réfrigérant à haute pression traversant le premier échangeur de chaleur interne 19. Le fluide réfrigérant à basse pression retourne ensuite vers le compresseur 3.

Ce mode de refroidissement est utile pour refroidir le flux d'air intérieur 100.

Dans ce mode de refroidissement, les deux échangeurs de chaleur interne 19 et 19' sont actifs et leurs effets s'additionnent. L'utilisation des échangeurs de chaleur interne 19 et 19' l'un après l'autre, permet de diminuer l'enthalpie du fluide réfrigérant en entrée du premier dispositif de détente 7. Le fluide réfrigérant à l'état liquide en sortie du premier échangeur de chaleur bifluide 5 est refroidi par le fluide réfrigérant à l'état gazeux et à basse pression sortant du premier échangeur de chaleur 9. La différence d'enthalpie aux bornes du premier échangeur de chaleur 9 augmente sensiblement ce qui permet à la fois, une augmentation de la puissance frigorifique disponible au niveau dudit premier échangeur de chaleur 9 qui refroidit le flux d'air 100 et cela entraîne donc une amélioration du coefficient de performance (ou COP pour « coefficient of performance »).

De plus, l'ajout d'enthalpie au fluide réfrigérant à basse pression au niveau des premier 19 et deuxième 19' échangeurs de chaleur interne permet de limiter la proportion de fluide réfrigérant en phase liquide avant son entrée dans le compresseur 3, notamment lorsque le circuit de climatisation 1 comporte une bouteille déshydratante 14 disposée en aval du premier échangeur de chaleur bifluide 5.

Au niveau de la deuxième boucle de fluide caloporteur B, le fluide caloporteur gagne de l'enthalpie issue du fluide réfrigérant au niveau du premier échangeur de chaleur bifluide 5.

Comme illustré sur les figures 7a et 7b, une portion du fluide caloporteur circule dans la première conduite de circulation 50 et traverse le troisième échangeur de chaleur 54. Le fluide caloporteur ne perd cependant pas d'enthalpie car le volet d'obstruction 310 est refermé et bloque le flux d'air intérieur 100 de sorte qu'il ne traverse pas le troisième échangeur de chaleur 54.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200. La quatrième vanne d'arrêt 63 est ouverte pour permettre le passage du fluide caloporteur.

Une solution alternative (non représentée) pour que le fluide caloporteur n'échange pas avec le flux d'air intérieur 100 au niveau du troisième échangeur de chaleur 54, est de munir, comme sur la figure 6, la première conduite de circulation 50 de la cinquième vanne d'arrêt 53 et de la fermer de sorte à empêcher le fluide caloporteur de circuler dans ladite première conduite de circulation 50.

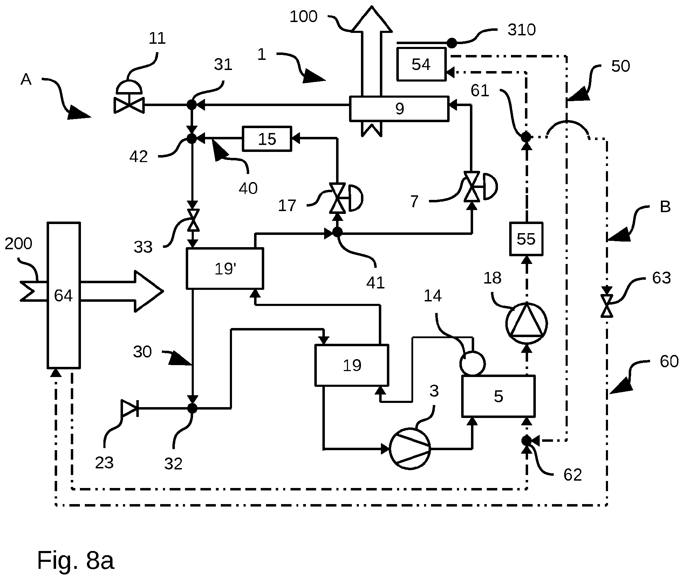

Les figures 8a à 8b montrent un mode de refroidissement secondaire parallèle dans lequel :
∘ le fluide réfrigérant circule dans le compresseur 3 où ledit fluide réfrigérant passe à haute pression et circule successivement dans le premier échangeur de chaleur bifluide 5, le premier échangeur de chaleur interne 19, le deuxième échangeur de chaleur interne 19' :
   ▪ une première partie du fluide réfrigérant passe dans la deuxième conduite de contournement 40, passe dans le troisième dispositif de détente 17 où ledit fluide réfrigérant passe à basse pression, ledit fluide réfrigérant à basse pression circule ensuite dans le deuxième échangeur de chaleur bifluide 15 avant de rejoindre le fluide réfrigérant à basse pression issu du premier échangeur de chaleur 9 en amont du premier échangeur de chaleur interne 19,
   ▪ une deuxième partie du fluide réfrigérant passe dans le premier dispositif de détente 7 où ledit fluide réfrigérant passe à basse pression, ledit fluide réfrigérant à basse pression circule ensuite successivement dans le premier échangeur de chaleur 9, la première conduite de contournement 30 où il passe dans le deuxième échangeur de chaleur interne 19', et ensuite dans le premier échangeur de chaleur interne 19 avant de retourner au compresseur 3,
∘ le fluide caloporteur en sortie du premier échangeur de chaleur bifluide 5 circule dans le quatrième échangeur de chaleur 64 de la deuxième conduite de circulation 50.

Comme illustré par les figures 8a à 8c, une portion du fluide caloporteur en sortie du premier échangeur de chaleur bifluide 5 circule dans le troisième échangeur de chaleur 54 de la première conduite de circulation 50 et une autre portion du fluide caloporteur en sortie du premier échangeur de chaleur bifluide 5 circule dans le quatrième échangeur de chaleur 64 de la deuxième conduite de circulation 50. Le volet d'obstruction 310 est fermé de sorte à empêcher le flux d'air intérieur 100 de circuler dans le troisième échangeur de chaleur 54.

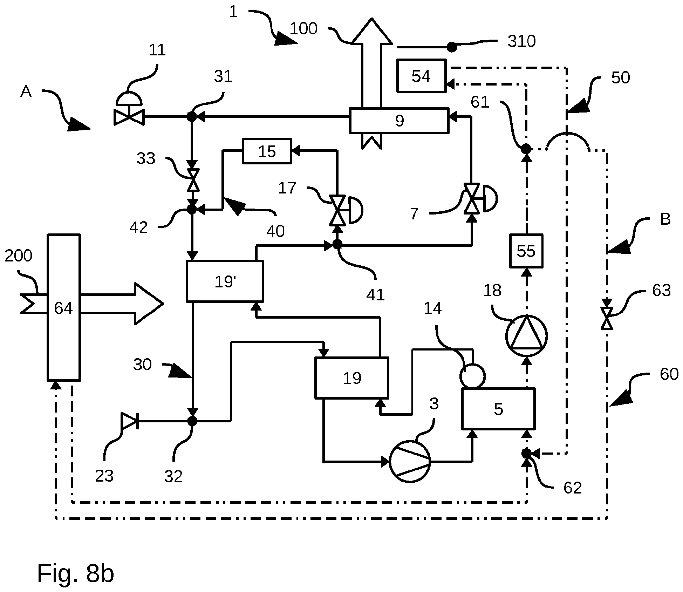

Les figures 8a et 8b montrent le mode de refroidissement secondaire parallèle lorsque le circuit de climatisation inversible indirect 1 est respectivement selon le premier mode de réalisation de la figure 1 et le deuxième mode de réalisation de la figure 2.

Dans ces deux modes de réalisation, le fluide réfrigérant à l'entrée du compresseur 3 est en phase gazeuse. Le fluide réfrigérant subit une compression en passant dans le compresseur 3. Ledit fluide réfrigérant est alors dit à haute pression en sortie dudit compresseur 3.

Le fluide réfrigérant à haute pression traverse le premier échangeur de chaleur bifluide 5 et subit une perte d'enthalpie du fait de son passage en phase liquide et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier échangeur de chaleur interne 19 où il perd de l'enthalpie. Cette enthalpie est transférée au fluide réfrigérant à basse pression issu de la première conduite de contournement 30.

Le fluide réfrigérant à haute pression passe ensuite dans le deuxième échangeur de chaleur interne 19' où il perd de nouveau de l'enthalpie. Cette enthalpie est transférée au fluide réfrigérant à basse pression traversant la première conduite de contournement 30.

Comme illustré sur les figures 8a et 8b, en sortie du deuxième échangeur de chaleur interne 19', une première partie du fluide réfrigérant passe dans la deuxième conduite de contournement 40 et une deuxième partie du fluide réfrigérant se dirige vers le premier dispositif de détente 7.

La première partie du fluide réfrigérant passe dans le troisième dispositif de détente 17. Le fluide réfrigérant à haute pression subit une perte de pression isenthalpique et passe dans un état de mélange diphasique. Le fluide réfrigérant est maintenant dit à basse pression.

Le fluide réfrigérant à basse pression passe ensuite dans le deuxième échangeur de chaleur bifluide 15 où il gagne de l'enthalpie en refroidissant le fluide caloporteur circulant dans la boucle de gestion thermique secondaire. Le fluide réfrigérant repasse à l'état gazeux. A la sortie du deuxième échangeur de chaleur bifluide 15, le fluide réfrigérant rejoint la première conduite de contournement 30. Dans le premier mode de réalisation illustré à la figure 8a, le fluide réfrigérant rejoint la première conduite de contournement 30 en amont de la première vanne d'arrêt 33 et du deuxième échangeur de chaleur interne 19'. Dans le deuxième mode de réalisation illustré à la figure 8b, le fluide réfrigérant rejoint la première conduite de contournement 30 en aval de la première vanne d'arrêt 33 et en amont du deuxième échangeur de chaleur interne 19'.

La deuxième partie du fluide réfrigérant à haute pression passe dans le premier dispositif de détente 7. Le fluide réfrigérant à haute pression subit une perte de pression isenthalpique et passe dans un état de mélange diphasique. Le fluide réfrigérant est maintenant dit à basse pression.

Le fluide réfrigérant à basse pression passe ensuite dans le premier échangeur de chaleur 9 où il gagne de l'enthalpie en refroidissant le flux d'air intérieur 100. Le fluide réfrigérant repasse à l'état gazeux. A la sortie du premier échangeur de chaleur 9, le fluide réfrigérant est redirigé vers la première conduite de contournement 30. Afin que le fluide réfrigérant ne passe pas dans le deuxième échangeur de chaleur 13, le deuxième dispositif de détente 11 est fermé.

Le fluide réfrigérant à basse pression issue à la fois du premier échangeur de chaleur 9 et de la deuxième conduite de contournement 40 passe ensuite dans le deuxième échangeur de chaleur interne 19' où il gagne de l'enthalpie issue du fluide réfrigérant à haute pression traversant le deuxième échangeur de chaleur interne 19'.

Le fluide réfrigérant à basse pression passe ensuite dans le premier échangeur de chaleur interne 19 où il gagne de nouveau de l'enthalpie issue du fluide réfrigérant à haute pression traversant le premier échangeur de chaleur interne 19. Le fluide réfrigérant à basse pression retourne ensuite vers le compresseur 3.

Ce mode de refroidissement est utile pour refroidir le flux d'air intérieur 100 ainsi que pour refroidir le fluide caloporteur de la boucle de gestion thermique secondaire afin de refroidir des éléments tels que des batteries et/ou des éléments électroniques.

Dans ce mode de refroidissement secondaire parallèle, pour les premier et deuxième modes de réalisation, les deux échangeurs de chaleur interne 19 et 19' sont actifs à la fois pour le fluide réfrigérant issu du premier échangeur de chaleur 9 et le fluide réfrigérant traversant la deuxième conduite de contournement 40, et leurs effets s'additionnent. L'utilisation des échangeurs de chaleur interne 19 et 19' l'un après l'autre, permet de diminuer l'enthalpie du fluide réfrigérant en entrée du premier dispositif de détente 7. Le fluide réfrigérant à l'état liquide en sortie du premier échangeur de chaleur bifluide 5 est refroidi par le fluide réfrigérant à l'état gazeux et à basse pression sortant du premier échangeur de chaleur 9 et du deuxième échangeur de chaleur bifluide 15. La différence d'enthalpie aux bornes de ces deux échangeurs de chaleur augmente sensiblement ce qui permet à la fois, une augmentation de la puissance frigorifique disponible au niveau dudit premier échangeur de chaleur 9 et du deuxième échangeur de chaleur bifluide 15 et cela entraîne donc une amélioration du coefficient de performance (ou COP pour « coefficient of performance »).

De plus, l'ajout d'enthalpie au fluide réfrigérant à basse pression au niveau des premier 19 et deuxième 19' échangeurs de chaleur interne permet de limiter la proportion de fluide réfrigérant en phase liquide avant sont entrée dans le compresseur 3, notamment lorsque le circuit de climatisation 1 comporte une bouteille déshydratante 14 disposée en aval du premier échangeur de chaleur bifluide 5.

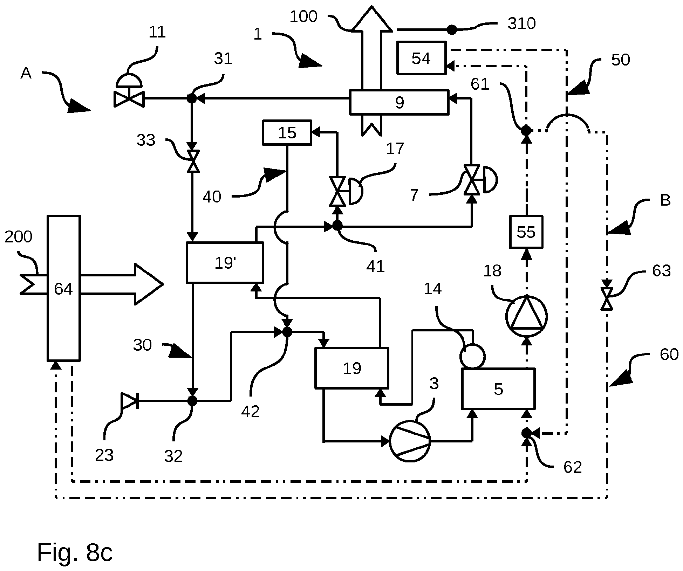

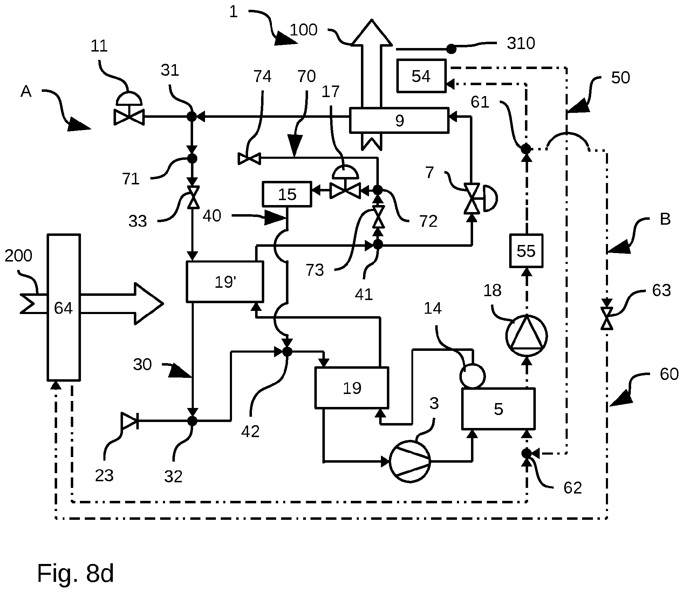

Les figures 8c et 8d montrent le mode de refroidissement secondaire parallèle lorsque le circuit de climatisation inversible indirect 1 est respectivement selon le troisième mode de réalisation de la figure 3 et le quatrième mode de réalisation de la figure 4.

Dans ces deux modes de réalisation, le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse le premier échangeur de chaleur bifluide 5 et subit une perte d'enthalpie du fait de son passage en phase liquide et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier échangeur de chaleur interne 19 où il perd de l'enthalpie. Cette enthalpie est transférée au fluide réfrigérant à basse pression issu de la première conduite de contournement 30.

Le fluide réfrigérant à haute pression passe ensuite dans le deuxième échangeur de chaleur interne 19' où il perd de nouveau de l'enthalpie. Cette enthalpie est transférée au fluide réfrigérant à basse pression traversant la première conduite de contournement 30.

Comme illustré sur les figures 8c et 8d, en sortie du deuxième échangeur de chaleur interne 19', une première partie du fluide réfrigérant passe dans la deuxième conduite de contournement 40 et une deuxième partie du fluide réfrigérant se dirige vers le premier dispositif de détente 7. Selon le quatrième mode de réalisation illustré à la figure 8d la première partie du fluide réfrigérant peut passer dans la deuxième conduite de contournement 40 du fait que la deuxième vanne d'arrêt 73 est ouverte.

La première partie du fluide réfrigérant passe dans le troisième dispositif de détente 17. Le fluide réfrigérant à haute pression subit une perte de pression isenthalpique et passe dans un état de mélange diphasique. Le fluide réfrigérant est maintenant dit à basse pression. Selon le quatrième mode de réalisation illustré à la figure 8d, la première partie du fluide réfrigérant ne passe pas dans la conduite de dérivation 70 du fait que la troisième vanne d'arrêt 74 est fermée.

Le fluide réfrigérant à basse pression passe ensuite dans le deuxième échangeur de chaleur bifluide 15 où il gagne de l'enthalpie en refroidissant le fluide caloporteur circulant dans la boucle de gestion thermique secondaire. Le fluide réfrigérant repasse à l'état gazeux. A la sortie du deuxième échangeur de chaleur bifluide 15, le fluide réfrigérant rejoint la deuxième partie du fluide réfrigérant qui est issu du premier échangeur de chaleur 9 en aval du deuxième échangeur de chaleur interne 19'.

La deuxième partie du fluide réfrigérant à haute pression passe dans le premier dispositif de détente 7. Le fluide réfrigérant à haute pression subit une perte de pression isenthalpique et passe dans un état de mélange diphasique. Le fluide réfrigérant est maintenant dit à basse pression.

Le fluide réfrigérant à basse pression passe ensuite dans le premier échangeur de chaleur 9 où il gagne de l'enthalpie en refroidissant le flux d'air intérieur 100. Le fluide réfrigérant repasse à l'état gazeux. A la sortie du premier échangeur de chaleur 9, le fluide réfrigérant est redirigé vers la première conduite de contournement 30. Afin que le fluide réfrigérant ne passe pas dans le deuxième échangeur de chaleur 13, le deuxième dispositif de détente 11 est fermé.

Le fluide réfrigérant à basse pression issue du premier échangeur de chaleur 9 passe ensuite dans le deuxième échangeur de chaleur interne 19' où il gagne de l'enthalpie issue du fluide réfrigérant à haute pression traversant le deuxième échangeur de chaleur interne 19'.

Le fluide réfrigérant à basse pression issu à la fois du premier échangeur de chaleur 9 et de la deuxième conduite de contournement 40 passe ensuite dans le premier échangeur de chaleur interne 19 où il gagne de nouveau de l'enthalpie issue du fluide réfrigérant à haute pression traversant le premier échangeur de chaleur interne 19. Le fluide réfrigérant à basse pression retourne ensuite vers le compresseur 3.

Ce mode de refroidissement est utile pour refroidir le flux d'air intérieur 100 ainsi que pour refroidir le fluide caloporteur de la boucle de gestion thermique secondaire afin de refroidir des éléments tels que des batteries et/ou des éléments électroniques.

Dans ce mode de refroidissement secondaire parallèle, les deux échangeurs de chaleur interne 19 et 19' sont actifs uniquement pour le fluide réfrigérant issu du premier échangeur de chaleur 9, et leurs effets s'additionnent. L'utilisation des échangeurs de chaleur interne 19 et 19' l'un après l'autre, permet de diminuer l'enthalpie du fluide réfrigérant en entrée du premier dispositif de détente 7. Le fluide réfrigérant à l'état liquide en sortie du premier échangeur de chaleur bifluide 5 est refroidi par le fluide réfrigérant à l'état gazeux et à basse pression sortant du premier échangeur de chaleur 9. La différence d'enthalpie aux bornes du premier échangeur de chaleur 9 augmente sensiblement ce qui permet à la fois, une augmentation de la puissance frigorifique disponible au niveau dudit premier échangeur de chaleur 9 et entraîne donc une amélioration du coefficient de performance (ou COP pour « coefficient of performance »).

De plus, l'ajout d'enthalpie au fluide réfrigérant à basse pression au niveau des premier 19 et deuxième 19' échangeurs de chaleur interne permet de limiter la proportion de fluide réfrigérant en phase liquide avant son entrée dans le compresseur 3, notamment lorsque le circuit de climatisation 1 comporte une bouteille déshydratante 14 disposée en aval du premier échangeur de chaleur bifluide 5.

Au niveau de la deuxième boucle de fluide caloporteur B, le fluide caloporteur gagne de l'enthalpie issue du fluide réfrigérant au niveau du premier échangeur de chaleur bifluide 5.

Comme illustré sur les figures 8a à 8d, une portion du fluide caloporteur circule dans la première conduite de circulation 50 et traverse le troisième échangeur de chaleur 54. Le fluide caloporteur ne perd cependant pas d'enthalpie car le volet d'obstruction 310 est refermé et bloque le flux d'air intérieur 100 de sorte qu'il ne traverse pas le troisième échangeur de chaleur 54.

Une autre portion du fluide caloporteur circule dans la deuxième conduite de circulation 60 et traverse le quatrième échangeur de chaleur 64. Le fluide caloporteur perd de l'enthalpie au niveau dudit échangeur de chaleur 64 en la relâchant dans le flux d'air extérieur 200. La quatrième vanne d'arrêt 63 est ouverte pour permettre le passage du fluide caloporteur.

Une solution alternative (non représentée) pour que le fluide caloporteur n'échange pas avec le flux d'air intérieur 100 au niveau du troisième échangeur de chaleur 54, est de munir, comme sur la figure 6, la première conduite de circulation 50 de la cinquième vanne d'arrêt 53 et de la fermer de sorte à empêcher le fluide caloporteur de circuler dans ladite première conduite de circulation 50.

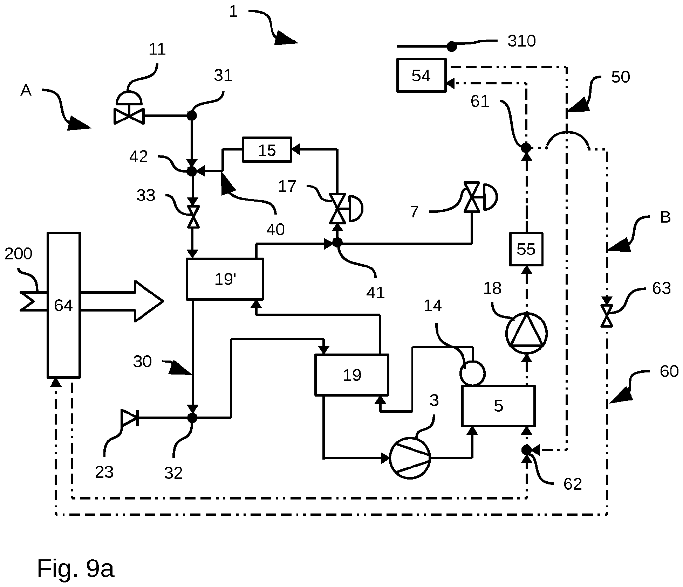

Les figures 9a à 9c montrent un mode de refroidissement secondaire strict dans lequel :
∘ le fluide réfrigérant circule dans le compresseur 3 où ledit fluide réfrigérant passe à haute pression et circule successivement dans le premier échangeur de chaleur bifluide 5, le premier échangeur de chaleur interne 19, le deuxième échangeur de chaleur interne 19', le fluide réfrigérant passe ensuite dans la deuxième conduite de contournement 40, passe dans le troisième dispositif de détente 17 où ledit fluide réfrigérant passe à basse pression, ledit fluide réfrigérant à basse pression circule ensuite dans le deuxième échangeur de chaleur bifluide 15,
∘ le fluide caloporteur en sortie du premier échangeur de chaleur bifluide 5 circule dans le quatrième échangeur de chaleur 64 de la deuxième conduite de circulation 50.

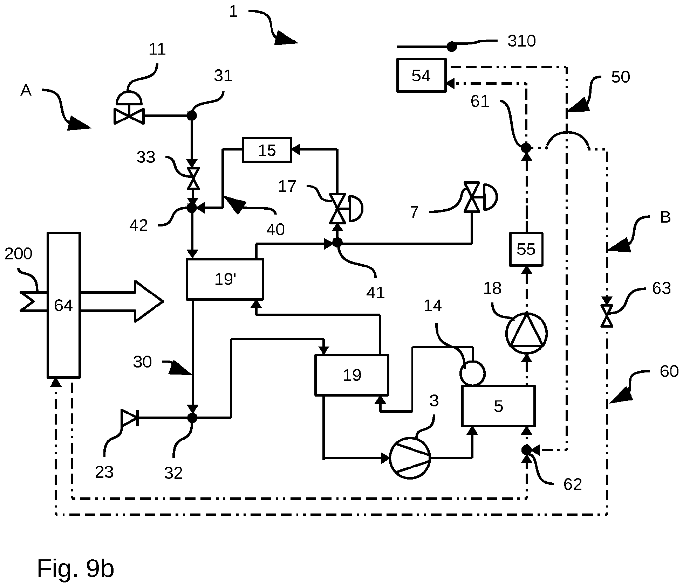

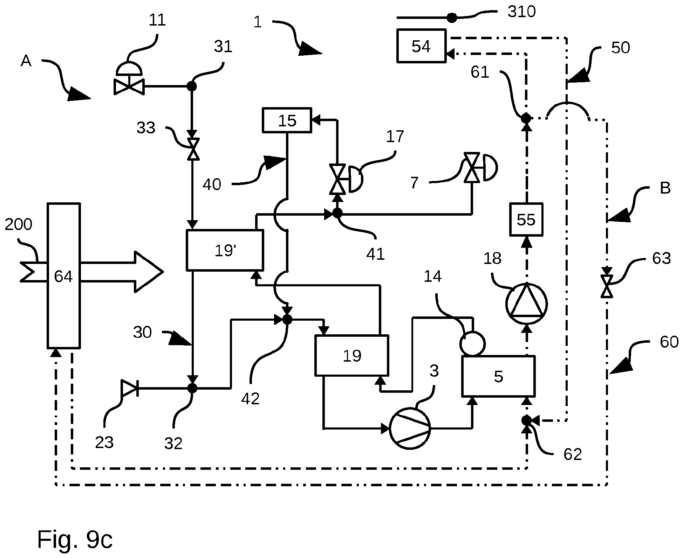

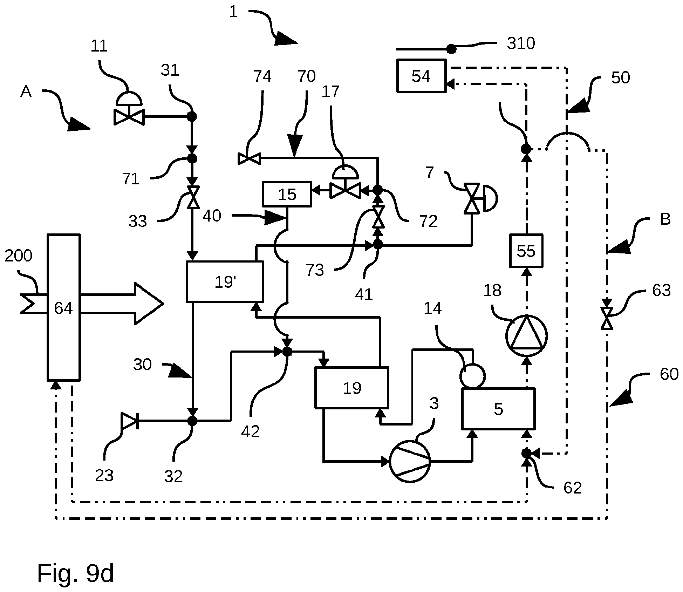

La figure 9a montre ce mode de refroidissement secondaire strict pour le premier mode de réalisation de la figure 1. La figure 9b montre ce mode de refroidissement secondaire strict pour le deuxième mode de réalisation de la figure 2. La figure 9c montre ce mode de refroidissement secondaire strict pour le troisième mode de réalisation de la figure 3. La figure 9d montre ce mode de refroidissement secondaire strict pour le quatrième mode de réalisation de la figure 4.

Ce mode de refroidissement secondaire strict est identique au mode de refroidissement secondaire parallèle décrit ci-dessus à la différence que le fluide réfrigérant à haute pression en sortie du deuxième échangeur de chaleur 19' circule uniquement dans la deuxième conduite de contournement 40 et ne passe pas par le premier échangeur de chaleur 9. Pour cela, le premier dispositif de détente 7 est fermé.

Ce mode de refroidissement secondaire strict est donc utile lorsque l'on veut uniquement refroidir le fluide caloporteur circulant dans la boucle de gestion thermique secondaire.

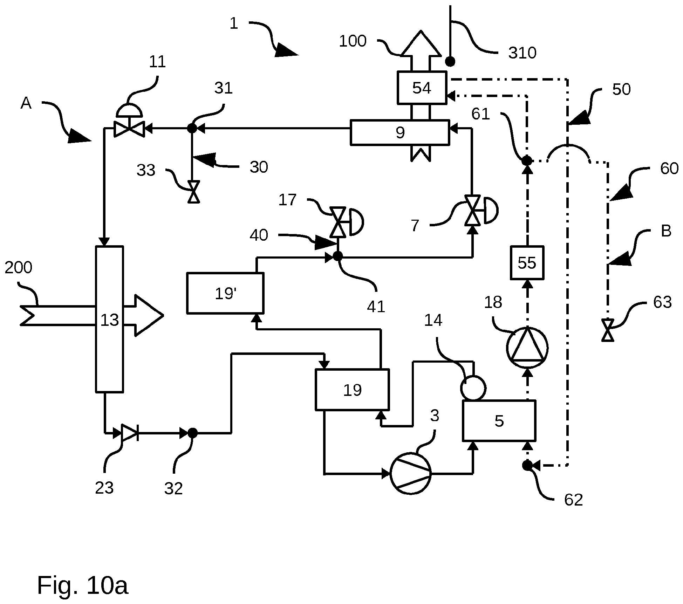

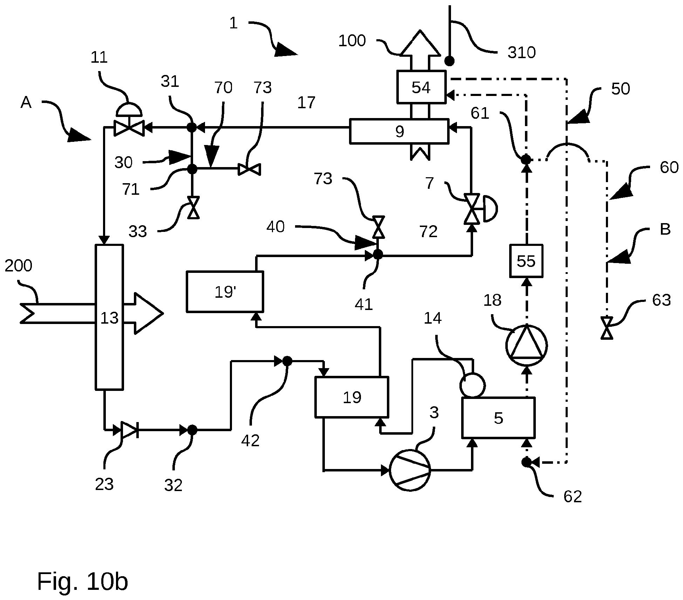

Les figures 10a et 10b montrent un mode pompe à chaleur dans lequel :
- le fluide réfrigérant circule dans le compresseur 3 où ledit fluide réfrigérant passe à haute pression et circule successivement dans le premier échangeur de chaleur bifluide 5, le premier échangeur de chaleur interne 19, le deuxième échangeur de chaleur interne 19', et le premier dispositif de détente 7 où ledit fluide réfrigérant passe à une pression intermédiaire, ledit fluide réfrigérant à pression intermédiaire circule ensuite successivement dans le premier échangeur de chaleur 9, le deuxième dispositif de détente 11 où ledit fluide réfrigérant passe à basse pression, le deuxième échangeur de chaleur 13 et ensuite dans le premier échangeur de chaleur interne 19 avant de retourner au compresseur 3,
- le fluide caloporteur en sortie du premier échangeur de chaleur bifluide 5 circule uniquement dans le troisième échangeur de chaleur 54 de la première conduite de circulation 50.

Par pression intermédiaire, on entend ici une pression située entre la basse pression du fluide réfrigérant lorsqu'il entre dans le compresseur 3 et la haute pression du fluide réfrigérant en sortie dudit compresseur 3.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse le premier échangeur de chaleur bifluide 5 et subit une perte d'enthalpie du fait de son passage en phase liquide et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier échangeur de chaleur interne 19 où il perd de l'enthalpie. Cette enthalpie est transférée au fluide réfrigérant à basse pression en provenance du deuxième échangeur de chaleur 13.

Le fluide réfrigérant à haute pression passe ensuite dans le deuxième échangeur de chaleur interne 19' où il ne perd pas d'enthalpie car il n'y a pas de circulation de fluide réfrigérant dans ledit deuxième échangeur de chaleur interne 19'.

Comme illustré sur la figure 10a, en sortie du deuxième échangeur de chaleur interne 19', le fluide réfrigérant ne circule pas dans la deuxième conduite de contournement 40 du fait que le troisième dispositif de détente 17 est fermé.

Si le circuit de climatisation inversible indirect 1 est selon le quatrième mode de réalisation comme illustré à la figure 10b, le fluide réfrigérant ne circule pas dans la deuxième conduite de contournement 40 du fait que la deuxième vanne d'arrêt 73 est fermée.

Le fluide réfrigérant à haute pression passe ensuite dans le premier dispositif de détente 7. Le fluide réfrigérant subit une première perte de pression isenthalpique ce qui le fait passer dans un état de mélange diphasique. Le fluide réfrigérant est maintenant à une pression intermédiaire.

Le fluide réfrigérant traverse ensuite le premier échangeur de chaleur 9 où il perd de l'enthalpie en réchauffant le flux d'air intérieur 100.

A la sortie du premier échangeur de chaleur 9, le fluide réfrigérant est redirigé vers le deuxième échangeur de chaleur 13. Pour cela, la première vanne d'arrêt 33 de la première conduite de contournement est fermée. Avant d'arriver au deuxième échangeur de chaleur 13, le fluide réfrigérant passe dans le premier dispositif de détente 11 où il subit une deuxième perte de pression isenthalpique. Le fluide réfrigérant est maintenant à basse pression.

Comme illustré sur la figure 10b, si une conduite de dérivation 70 est présente, le fluide réfrigérant à pression intermédiaire ne traverse pas ladite conduite de dérivation 70 du fait que la troisième vanne d'arrêt 74 est fermée.

Le fluide réfrigérant à basse pression traverse ensuite le deuxième échangeur de chaleur 13 où il gagne de l'enthalpie en absorbant de l'enthalpie du flux d'air extérieur 200. Le fluide réfrigérant repasse ainsi à l'état gazeux.

Le fluide réfrigérant à basse pression passe ensuite dans le premier échangeur de chaleur interne 19 où il gagne de nouveau de l'enthalpie issue du fluide réfrigérant à haute pression traversant le premier échangeur de chaleur interne 19. Le fluide réfrigérant à basse pression retourne ensuite vers le compresseur 3.

Dans ce mode pompe à chaleur, seul le premier échangeur de chaleur interne 19 est actif. Du fait que l'enthalpie du fluide réfrigérant à basse pression en entrée du compresseur 3 est plus importante, l'enthalpie du fluide réfrigérant à haute pression en sortie du compresseur 3 sera elle aussi supérieure à l'enthalpie du fluide réfrigérant lorsqu'il n'y a pas d'échangeur de chaleur interne.

De plus, l'ajout d'enthalpie au fluide réfrigérant à basse pression au niveau du premier échangeur de chaleur interne 19 permet de limiter la proportion de fluide réfrigérant en phase liquide avant son entrée dans le compresseur 3, notamment lorsque le circuit de climatisation 1 comporte une bouteille déshydratante 14 disposée en aval du premier échangeur de chaleur bifluide 5. L'effet du premier échangeur de chaleur interne 19 est limité du fait que sa longueur est comprise entre 50 et 120mm. Cette taille permet de limiter les échanges de chaleur entre le fluide réfrigérant à haute pression et le fluide réfrigérant à basse pression de sorte que l'enthalpie échangée permet de limiter la proportion de fluide réfrigérant en phase liquide avant son entrée dans le compresseur 3 sans pour autant pénaliser l'efficacité du mode pompe à chaleur. En effet, le but de ce mode pompe à chaleur est de relâcher le plus d'enthalpie possible dans le flux d'air intérieur 100 afin de le réchauffer au niveau du premier échangeur de chaleur 9. Cette enthalpie vient, dans ce mode pompe à chaleur, du flux d'air extérieur 200 par l'intermédiaire du deuxième échangeur de chaleur 13.

Au niveau de la deuxième boucle de fluide caloporteur B, le fluide caloporteur gagne de l'enthalpie issue du fluide réfrigérant au niveau du premier échangeur de chaleur bifluide 5.

Comme illustré sur les figures 10a et 10b, le fluide caloporteur circule dans la première conduite de circulation 50 et traverse le troisième échangeur de chaleur 54. Le fluide caloporteur perd de l'enthalpie en réchauffant le flux d'air intérieur 100. Pour cela, le volet d'obstruction 310 est ouvert et/ou la cinquième vanne d'arrêt 53 est ouverte. La quatrième vanne d'arrêt 63 est quant à elle fermée pour empêcher le passage du fluide caloporteur dans la deuxième conduite de circulation 60.

Ce mode pompe à chaleur est utile pour réchauffer le flux d'air intérieur 100 à la fois au niveau du premier échangeur de chaleur 9 et du troisième échangeur de chaleur 54 en absorbant de l'enthalpie du flux d'air extérieur 200 au niveau du deuxième échangeur de chaleur 13.

De plus, l'élément électrique chauffant 55 peut être en fonctionnement afin de fournir un apport supplémentaire d'énergie calorifique au fluide caloporteur pour réchauffer le flux d'air intérieur 100.

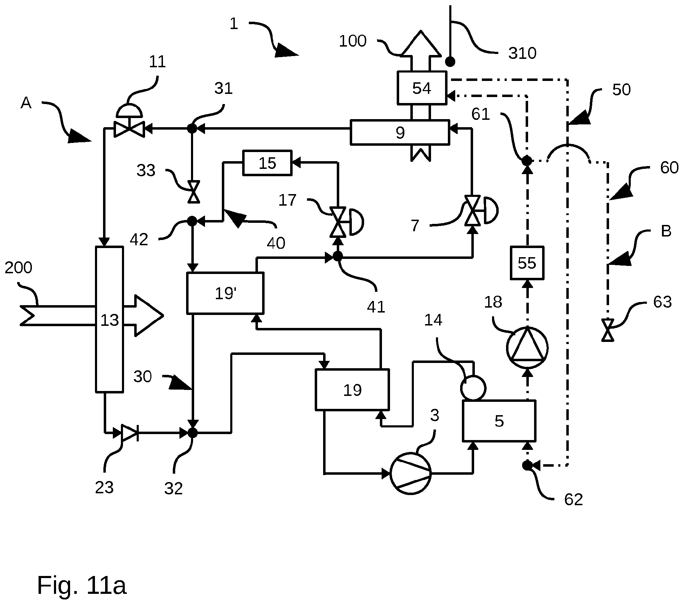

Les figures 11a à 11c montrent un mode pompe à chaleur secondaire parallèle dans lequel :
∘ le fluide réfrigérant circule dans le compresseur 3 où ledit fluide réfrigérant passe à haute pression et circule successivement dans le premier échangeur de chaleur bifluide 5, le premier échangeur de chaleur interne 19 et le deuxième échangeur de chaleur interne 19' :
   ▪ une première partie du fluide réfrigérant passe par la deuxième conduite de contournement 40 en traversant le troisième dispositif de détente 17 où le fluide réfrigérant passe à basse pression, le deuxième échangeur de chaleur bifluide 15 avant de rejoindre le fluide réfrigérant issu du deuxième échangeur de chaleur en amont du premier échangeur de chaleur interne 19,
   ▪ une deuxième partie du fluide réfrigérant passe par le premier dispositif de détente 7 où ledit fluide réfrigérant passe à une pression intermédiaire, ledit fluide réfrigérant circule ensuite successivement dans le premier échangeur de chaleur 9, le deuxième dispositif de détente 11 où ledit fluide réfrigérant passe à basse pression et dans le deuxième échangeur de chaleur 13,
   ▪ le fluide réfrigérant à basse pression traverse ensuite le premier échangeur de chaleur interne (19) avant de retourner au compresseur (3),
∘ le fluide caloporteur en sortie du premier échangeur de chaleur bifluide (5) circule uniquement dans le troisième échangeur de chaleur (54) de la première conduite de circulation (50).

Ce mode pompe à chaleur secondaire parallèle n'est possible que si le fluide réfrigérant à pression intermédiaire en sortie du premier échangeur de chaleur 9 ne passe pas par la première conduite de contournement 30 et traverse le deuxième dispositif de détente 11 et le deuxième échangeur de chaleur 13. Cela n'est donc possible que si la première vanne d'arrêt 33 est fermée. De plus il est également nécessaire qu'une partie du fluide réfrigérant à haute pression puisse traverser la deuxième conduite de contournement 40 et rejoigne le fluide réfrigérant à basse pression issu du deuxième échangeur de chaleur 13. Or, cela est impossible dans le cas du premier mode de réalisation où le deuxième point de raccordement 42 de la deuxième conduite de contournement 40 est situé en amont de la première vanne d'arrêt 33. Donc seuls les deuxième, troisième et quatrième modes de réalisation peuvent mettre en œuvre ce mode de pompe à chaleur secondaire parallèle.

La figure 11a montre ce mode pompe à chaleur secondaire lorsque le circuit de climatisation inversible indirect 1 est selon le deuxième mode de réalisation de figure 2.

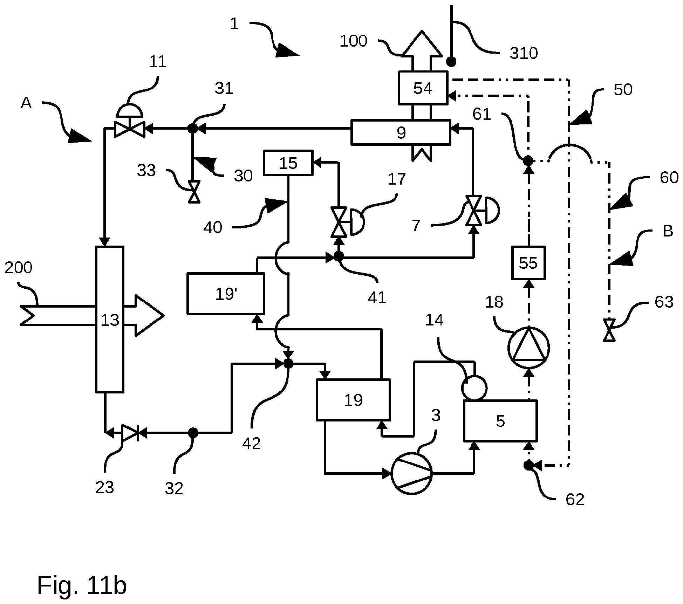

La figure 11b montre ce mode pompe à chaleur secondaire lorsque le circuit de climatisation inversible indirect 1 est selon le troisième mode de réalisation de figure 3.

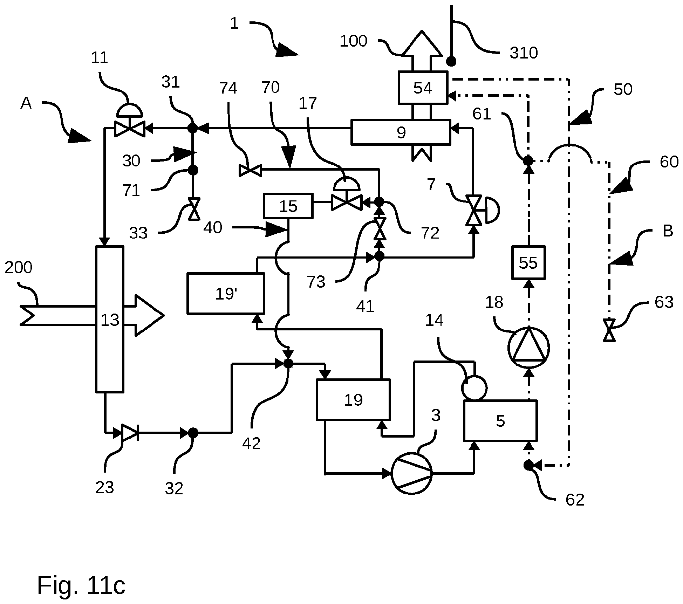

La figure 11c montre ce mode pompe à chaleur secondaire lorsque le circuit de climatisation inversible indirect 1 est selon le quatrième mode de réalisation de figure 4.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse le premier échangeur de chaleur bifluide 5 et subit une perte d'enthalpie du fait de son passage en phase liquide et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier échangeur de chaleur interne 19 où il perd de l'enthalpie. Cette enthalpie est transférée au fluide réfrigérant à basse pression en provenance du deuxième échangeur de chaleur 13 et de la deuxième conduite de contournement 40.

Le fluide réfrigérant à haute pression passe ensuite dans le deuxième échangeur de chaleur interne 19'.

Lorsque le circuit de climatisation inversible indirect 1 est selon le deuxième mode de réalisation comme illustré sur la figure 11a, le fluide réfrigérant à haute pression échange de l'enthalpie avec le fluide réfrigérant à basse pression issu de la deuxième conduite de contournement 40 du fait que son deuxième point de raccordement 42 est en amont du deuxième échangeur de chaleur interne 19' sur la première conduite de contournement 30.

Lorsque le circuit de climatisation inversible indirect 1 est selon le troisième ou quatrième mode de réalisation comme illustré sur les figures 11b et 11c, le fluide réfrigérant à haute pression ne perd pas d'enthalpie car il n'y a pas de circulation de fluide réfrigérant dans ledit deuxième échangeur de chaleur interne 19' du fait que le deuxième point de raccordement 42 de la deuxième conduite de contournement 40 est en aval du deuxième échangeur de chaleur interne 19'.

La première partie du fluide réfrigérant passe dans le troisième dispositif de détente 17. Le fluide réfrigérant à haute pression subit une perte de pression isenthalpique et passe dans un état de mélange diphasique. Le fluide réfrigérant est maintenant dit à basse pression. Lorsque le circuit de climatisation inversible indirect 1 est selon le quatrième mode de réalisation, la deuxième vanne d'arrêt 73 est ouverte comme illustré à la figure 11c.

Le fluide réfrigérant à basse pression passe ensuite dans le deuxième échangeur de chaleur bifluide 15 où il gagne de l'enthalpie en refroidissant le fluide caloporteur circulant dans la boucle de gestion thermique secondaire. Le fluide réfrigérant repasse à l'état gazeux.

Selon le deuxième mode de réalisation illustré à la figure 11a, à la sortie du deuxième échangeur de chaleur bifluide 15, le fluide réfrigérant rejoint la première conduite de contournement 30 en aval de la première vanne d'arrêt 33 et en amont du deuxième échangeur de chaleur interne 19'. Selon les troisième et quatrième modes de réalisation, le fluide réfrigérant rejoint la première conduite de contournement 30 en aval du deuxième échangeur de chaleur interne 19'.

La deuxième partie du fluide réfrigérant à haute pression passe quant à elle dans le premier dispositif de détente 7. Le fluide réfrigérant subit une première perte de pression isenthalpique ce qui le fait passer dans un état de mélange diphasique. Le fluide réfrigérant est maintenant à une pression intermédiaire.

Le fluide réfrigérant traverse ensuite le premier échangeur de chaleur 9 où il perd de l'enthalpie en réchauffant le flux d'air intérieur 100.

A la sortie du premier échangeur de chaleur 9, le fluide réfrigérant est redirigé vers le deuxième échangeur de chaleur 13. Pour cela, la première vanne d'arrêt 33 de la première conduite de contournement 30 est fermée. Avant d'arriver au deuxième échangeur de chaleur 13, le fluide réfrigérant passe dans le premier dispositif de détente 11 où il subit une deuxième perte de pression isenthalpique. Le fluide réfrigérant est maintenant à basse pression.

Comme illustré sur la figure 11c, si une conduite de dérivation 70 est présente, le fluide réfrigérant à pression intermédiaire ne traverse pas ladite conduite de dérivation 70 du fait que la troisième vanne d'arrêt 74 est fermée.

Le fluide réfrigérant à basse pression traverse ensuite le deuxième échangeur de chaleur 13 où il gagne de l'enthalpie en absorbant de l'enthalpie du flux d'air extérieur 200. Le fluide réfrigérant repasse ainsi à l'état gazeux. En sortie du deuxième échangeur de chaleur 13, le fluide réfrigérant est rejoint par le fluide réfrigérant ayant traversé la deuxième conduite de contournement 40.

Le fluide réfrigérant à basse pression passe ensuite dans le premier échangeur de chaleur interne 19 où il gagne de nouveau de l'enthalpie issue du fluide réfrigérant à haute pression traversant le premier échangeur de chaleur interne 19. Le fluide réfrigérant à basse pression retourne ensuite vers le compresseur 3.

Dans ce mode pompe à chaleur secondaire parallèle, le premier échangeur de chaleur interne 19 ainsi que le deuxième échangeur de chaleur interne 19' sont actifs dans le deuxième mode de réalisation.

Pour les troisième et quatrième modes de réalisations, seul le premier échangeur de chaleur interne 19 est actif. Du fait que l'enthalpie du fluide réfrigérant à basse pression en entrée du compresseur 3 est plus importante, l'enthalpie du fluide réfrigérant à haute pression en sortie du compresseur 3 sera elle aussi supérieure à l'enthalpie du fluide réfrigérant lorsqu'il n'y a pas d'échangeur de chaleur interne.

De plus, l'ajout d'enthalpie au fluide réfrigérant à basse pression au niveau du premier échangeur de chaleur interne 19 permet de limiter la proportion de fluide réfrigérant en phase liquide avant son entrée dans le compresseur 3, notamment lorsque le circuit de climatisation 1 comporte une bouteille déshydratante 14 disposée en aval du premier échangeur de chaleur bifluide 5. L'effet du premier échangeur de chaleur interne 19 est limité du fait que sa longueur est comprise entre 50 et 120mm. Cette taille permet de limiter les échanges de chaleur entre le fluide réfrigérant à haute pression et le fluide réfrigérant à basse pression de sorte que l'enthalpie échangée permet de limiter la proportion de fluide réfrigérant en phase liquide avant son entrée dans le compresseur 3 sans pour autant pénaliser l'efficacité du mode pompe à chaleur secondaire parallèle. En effet, le but de ce mode pompe à chaleur secondaire parallèle est de relâcher le plus d'enthalpie possible dans le flux d'air intérieur 100 afin de le réchauffer au niveau du premier échangeur de chaleur 9. Cette enthalpie vient, dans ce mode pompe à chaleur secondaire parallèle, du flux d'air extérieur 200 par l'intermédiaire du deuxième échangeur de chaleur 13, mais également de la boucle de gestion thermique secondaire par l'intermédiaire du deuxième échangeur de chaleur bifluide 15.

Au niveau de la deuxième boucle de fluide caloporteur B, le fluide caloporteur gagne de l'enthalpie issue du fluide réfrigérant au niveau du premier échangeur de chaleur bifluide 5.

Comme illustré sur les figures 11a à 11c, le fluide caloporteur circule dans la première conduite de circulation 50 et traverse le troisième échangeur de chaleur 54. Le fluide caloporteur perd de l'enthalpie en réchauffant le flux d'air intérieur 100. Pour cela, le volet d'obstruction 310 est ouvert et/ou la cinquième vanne d'arrêt 53 est ouverte. La quatrième vanne d'arrêt 63 est quant à elle fermée pour empêcher le passage du fluide caloporteur dans la deuxième conduite de circulation 60.

Ce mode pompe à chaleur secondaire parallèle est utile pour réchauffer le flux d'air intérieur 100 à la fois au niveau du premier échangeur de chaleur 9 et du troisième échangeur de chaleur 54 en absorbant de l'enthalpie du flux d'air extérieur 200 au niveau du deuxième échangeur de chaleur 13, mais également de la boucle de gestion thermique secondaire au niveau du deuxième échangeur de chaleur bifluide 15.

De plus, l'élément électrique chauffant 55 peut être en fonctionnement afin de fournir un apport supplémentaire d'énergie calorifique au fluide caloporteur pour réchauffer le flux d'air intérieur 100.

De préférence, pour ce mode pompe à chaleur secondaire parallèle, la première partie du fluide réfrigérant passant par la deuxième conduite de contournement 40 a un débit massique plus important que la deuxième partie de fluide réfrigérant passant par le premier échangeur de chaleur 9.

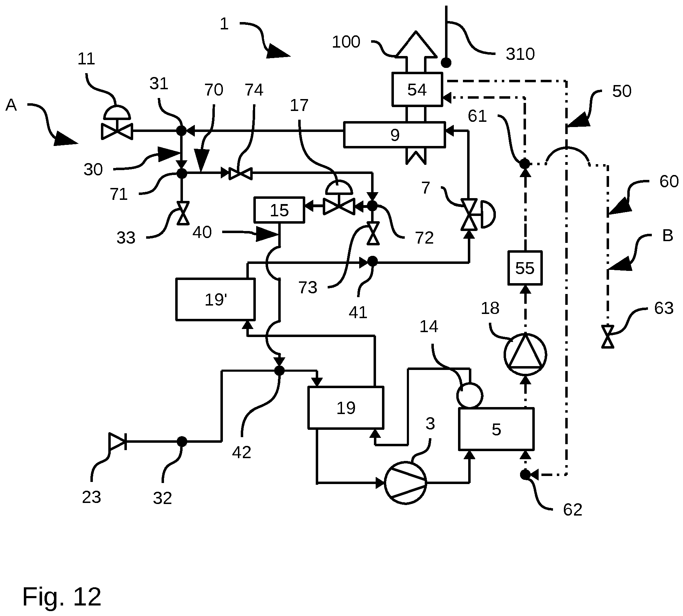

La figure 12 montre un mode pompe à chaleur secondaire strict dans lequel :
∘ le fluide réfrigérant circule dans le compresseur 3 où ledit fluide réfrigérant passe à haute pression et circule successivement dans le premier échangeur de chaleur bifluide 5, le premier échangeur de chaleur interne 19, le deuxième échangeur de chaleur interne 19', le premier dispositif de détente 7 où ledit fluide réfrigérant passe à une pression intermédiaire, ledit fluide réfrigérant circule ensuite successivement dans le premier échangeur de chaleur 9, la première conduite de contournement 30, la conduite de dérivation 70, le troisième dispositif de détente 17 où ledit fluide réfrigérant passe à basse pression, le deuxième échangeur de chaleur bifluide 15, le fluide réfrigérant à basse pression traverse ensuite le premier échangeur de chaleur interne 19 avant de retourner au compresseur 3,
∘ le fluide caloporteur en sortie du premier échangeur de chaleur bifluide 5 circule uniquement dans le troisième échangeur de chaleur 54 de la première conduite de circulation 50.

Le fluide réfrigérant à l'entrée du compresseur 3 est en phase gazeuse. Le fluide réfrigérant subit une compression en passant dans le compresseur 3. Ledit fluide réfrigérant est alors dit à haute pression.

Le fluide réfrigérant à haute pression traverse le premier échangeur de chaleur bifluide 5 et subit une perte d'enthalpie du fait de son passage en phase liquide et du transfert d'enthalpie vers le fluide caloporteur de la deuxième boucle de fluide caloporteur B. Le fluide réfrigérant à haute pression perd alors de l'enthalpie tout en restant à une pression constante.

Le fluide réfrigérant à haute pression passe ensuite dans le premier échangeur de chaleur interne 19 où il perd de l'enthalpie. Cette enthalpie est transférée au fluide réfrigérant à basse pression en provenance de la deuxième conduite de contournement 40.

Le fluide réfrigérant à haute pression passe ensuite dans le deuxième échangeur de chaleur interne 19' où il ne perd pas d'enthalpie car il n'y a pas de circulation de fluide réfrigérant dans ledit deuxième échangeur de chaleur interne 19' du fait que le deuxième point de raccordement 42 de la deuxième conduite de contournement 40 est en aval du deuxième échangeur de chaleur interne 19'.

Le fluide réfrigérant à haute pression passe dans le premier dispositif de détente 7. Le fluide réfrigérant subit une première perte de pression isenthalpique ce qui le fait passer dans un état de mélange diphasique. Le fluide réfrigérant est maintenant à une pression intermédiaire. Le fluide réfrigérant à haute pression ne passe pas dans la deuxième conduite de contournement 40 en sortie du deuxième échangeur de chaleur interne 19' du fait que la deuxième vanne d'arrêt 73 est fermée.

Le fluide réfrigérant traverse ensuite le premier échangeur de chaleur 9 où il perd de l'enthalpie en réchauffant le flux d'air intérieur 100.

A la sortie du premier échangeur de chaleur 9, le fluide réfrigérant à pression intermédiaire est redirigé vers la conduite de dérivation 70. Pour cela, la première vanne d'arrêt 33 de la première conduite de contournement 30 est fermée, ainsi que le deuxième dispositif de détente 11. La troisième vanne d'arrêt 74 est quant à elle ouverte.

Le fluide réfrigérant à pression intermédiaire passe ensuite dans le troisième dispositif de détente 17. Le fluide réfrigérant subit alors une deuxième perte de pression isenthalpique. Le fluide réfrigérant est maintenant dit à basse pression.

Le fluide réfrigérant à basse pression passe ensuite dans le deuxième échangeur de chaleur bifluide 15 où il gagne de l'enthalpie en refroidissant le fluide caloporteur circulant dans la boucle de gestion thermique secondaire. Le fluide réfrigérant repasse à l'état gazeux.

Le fluide réfrigérant à basse pression passe ensuite dans le premier échangeur de chaleur interne 19 où il gagne de nouveau de l'enthalpie issue du fluide réfrigérant à haute pression traversant le premier échangeur de chaleur interne 19. Le fluide réfrigérant à basse pression retourne ensuite vers le compresseur 3.

Dans ce mode pompe à chaleur secondaire strict, seul le premier échangeur de chaleur interne 19 est actif. Du fait que l'enthalpie du fluide réfrigérant à basse pression en entrée du compresseur 3 est plus importante, l'enthalpie du fluide réfrigérant à haute pression en sortie du compresseur 3 sera elle aussi supérieure à l'enthalpie du fluide réfrigérant lorsqu'il n'y a pas d'échangeur de chaleur interne.

De plus, l'ajout d'enthalpie au fluide réfrigérant à basse pression au niveau du premier échangeur de chaleur interne 19 permet de limiter la proportion de fluide réfrigérant en phase liquide avant son entrée dans le compresseur 3, notamment lorsque le circuit de climatisation 1 comporte une bouteille déshydratante 14 disposée en aval du premier échangeur de chaleur bifluide 5. L'effet du premier échangeur de chaleur interne 19 est limité du fait que sa longueur est comprise entre 50 et 120mm. Cette taille permet de limiter les échanges de chaleur entre le fluide réfrigérant à haute pression et le fluide réfrigérant à basse pression de sorte que l'enthalpie échangée permet de limiter la proportion de fluide réfrigérant en phase liquide avant son entrée dans le compresseur 3 sans pour autant pénaliser l'efficacité du mode pompe à chaleur secondaire strict. En effet, le but de ce mode pompe à chaleur secondaire strict est de relâcher le plus d'enthalpie possible dans le flux d'air intérieur 100 afin de le réchauffer au niveau du premier échangeur de chaleur 9. Cette enthalpie vient, dans ce mode pompe à chaleur secondaire strict, de la boucle de gestion thermique secondaire par l'intermédiaire du deuxième échangeur de chaleur bifluide 15.

Au niveau de la deuxième boucle de fluide caloporteur B, le fluide caloporteur gagne de l'enthalpie issue du fluide réfrigérant au niveau du premier échangeur de chaleur bifluide 5.

Comme illustré sur la figure 12, le fluide caloporteur circule dans la première conduite de circulation 50 et traverse le troisième échangeur de chaleur 54. Le fluide caloporteur perd de l'enthalpie en réchauffant le flux d'air intérieur 100. Pour cela, le volet d'obstruction 310 est ouvert et/ou la cinquième vanne d'arrêt 53 est ouverte. La quatrième vanne d'arrêt 63 est quant à elle fermée pour empêcher le passage du fluide caloporteur dans la deuxième conduite de circulation 60.

Ce mode pompe à chaleur secondaire strict est utile pour réchauffer le flux d'air intérieur 100 à la fois au niveau du premier échangeur de chaleur 9 et du troisième échangeur de chaleur 54 en absorbant de l'enthalpie uniquement de la boucle de gestion thermique secondaire au niveau du deuxième échangeur de chaleur bifluide 15.

De plus, l'élément électrique chauffant 55 peut être en fonctionnement afin de fournir un apport supplémentaire d'énergie calorifique au fluide caloporteur pour réchauffer le flux d'air intérieur 100.

D'autres modes de fonctionnement tels que des modes de dégivrage, de déshumidification ou de chauffage peuvent également être envisagés avec une telle architecture du circuit de climatisation inversible indirect 1.

Ainsi, on voit bien que de par son architecture et la présence de deux échangeurs de chaleur interne 19 et 19', le circuit de climatisation 1 permet un fonctionnement dans un mode de refroidissement ayant une performance frigorifique et un COP améliorés et dans un mode pompe à chaleur où son efficacité est peu réduite par l'effet d'un échangeur de chaleur interne. De plus la présence de la deuxième boucle de contournement 40 permet de refroidir des éléments tels que des batteries et/ou des composants électroniques présents dans la boucle de gestion thermique secondaire aussi bien lors de différents modes de refroidissement, mais également lors de mode pompe à chaleur où l'énergie calorifique relâchée par la boucle de gestion thermique secondaire permet de réchauffer le flux d'air intérieur 100 et donc participe au chauffage de l'habitacle.

## Revendications

1. Circuit de climatisation indirect (1) pour véhicule automobile comportant :
• une première boucle de fluide réfrigérant (A) dans laquelle circule un fluide réfrigérant, ladite première boucle de fluide réfrigérant (A) comportant dans le sens de circulation du fluide réfrigérant :
∘ un compresseur (3),
∘ un premier échangeur de chaleur bifluide (5),
∘ un premier dispositif de détente (7),
∘ un premier échangeur de chaleur (9) étant destiné à être traversé par un flux d'air intérieur (100) au véhicule automobile,
∘ un deuxième dispositif de détente (11),
∘ un deuxième échangeur de chaleur (13) étant destiné à être traversé par un flux d'air extérieur (200) au véhicule automobile, et
∘ une première conduite de contournement (30) du deuxième échangeur de chaleur (13) comportant une première vanne d'arrêt (33),
• une deuxième boucle de fluide caloporteur (B) dans laquelle circule un fluide caloporteur, et
• le premier échangeur de chaleur bifluide (5) étant agencé conjointement sur la première boucle de fluide réfrigérant (A) en aval du compresseur (3), entre ledit compresseur (3) et le premier dispositif de détente (7), et sur la deuxième boucle de fluide caloporteur (B), de façon à permettre les échanges de chaleur entre la première boucle de fluide réfrigérant (A) et la deuxième boucle de fluide caloporteur (B), **caractérisé en ce que** le circuit de climatisation indirect (1) comprend :
• un premier échangeur de chaleur interne (19), permettant un échange de chaleur entre le fluide réfrigérant à haute pression en sortie du premier échangeur de chaleur bifluide (5) et le fluide réfrigérant à basse pression en sortie du deuxième échangeur de chaleur (13) ou de la première conduite de contournement (30),
• un deuxième échangeur de chaleur interne (19') permettant un échange de chaleur entre le fluide réfrigérant à haute pression en sortie du premier échangeur de chaleur interne (19) et le fluide réfrigérant à basse pression circulant dans la première conduite de contournement (30),
• une deuxième conduite de contournement (40) du premier dispositif de détente (7) et du premier échangeur de chaleur (9), ladite deuxième conduite de contournement (40) comportant un troisième dispositif de détente (17) disposé en amont d'un deuxième échangeur de chaleur bifluide (15) également agencé conjointement sur une boucle de gestion thermique secondaire.

2. Circuit de climatisation inversible indirect (1) selon la revendication 1, **caractérisé en ce que** la deuxième conduite de contournement (40) est connectée d'une part en amont du premier dispositif de détente (7) et d'autre part sur la première conduite de contournement (30), en amont de la première vanne d'arrêt (33) et du deuxième échangeur de chaleur interne (19').

3. Circuit de climatisation inversible indirect (1) selon la revendication 1, **caractérisé en ce que** la deuxième conduite de contournement (40) est connectée d'une part en amont du premier dispositif de détente (7) et d'autre part sur la première conduite de contournement (30), en amont du deuxième échangeur de chaleur (19') et en aval de la première vanne d'arrêt (33).

4. Circuit de climatisation inversible indirect (1) selon la revendication 1, **caractérisé en ce que** la deuxième conduite de contournement (40) est connectée d'une part en amont du premier dispositif de détente (7) et d'autre part en aval du deuxième dispositif de détente (19'), entre ledit deuxième dispositif de détente (19') et le premier échangeur de chaleur interne (19).

5. Circuit de climatisation inversible indirect (1) selon la revendication précédente, **caractérisé en ce que** la première boucle de fluide réfrigérant (A) comporte une conduite de dérivation (70) connectée d'une part sur la première conduite de contournement (30), en amont de la vanne d'arrêt (33) du deuxième échangeur de chaleur (19') et d'autre part en amont du troisième dispositif de détente (17) entre ledit troisième dispositif de détente (17) et une deuxième vanne d'arrêt (73), ladite conduite de dérivation (70) comportant une troisième vanne d'arrêt (74).

6. Circuit de climatisation inversible indirect (1) selon l'une des revendications précédentes, **caractérisé en ce que** la deuxième boucle de fluide caloporteur (B) comporte :
∘ le premier échangeur de chaleur bifluide (5),
∘ une première conduite de circulation (50) de fluide caloporteur comportant un troisième échangeur de chaleur (54) destiné à être traversé par un flux d'air intérieur (100) au véhicule automobile, et reliant un premier point de jonction (61) disposé en aval du premier échangeur de chaleur bifluide (5) et un deuxième point de jonction (62) disposé en amont dudit premier échangeur de chaleur bifluide (5),
∘ une deuxième conduite de circulation (60) de fluide caloporteur comportant un quatrième échangeur de chaleur (64) destiné à être traversé par un flux d'air extérieur (200) au véhicule automobile, et reliant le premier point de jonction (61) disposé en aval du premier échangeur de chaleur bifluide (5) et le deuxième point de jonction (62) disposé en amont dudit premier échangeur de chaleur bifluide (5), et
∘ une pompe (18) disposée en aval ou en amont du premier échangeur de chaleur bifluide (5), entre le premier point de jonction (61) et le deuxième point de jonction (62).

7. Procédé de fonctionnement d'un circuit de climatisation inversible indirect (1) selon la revendication 6, selon un mode de refroidissement secondaire parallèle dans lequel :
∘ le fluide réfrigérant circule dans le compresseur (3) où ledit fluide réfrigérant passe à haute pression et circule successivement dans le premier échangeur de chaleur bifluide (5), le premier échangeur de chaleur interne (19), le deuxième échangeur de chaleur interne (19') :
▪ une première partie du fluide réfrigérant passe dans la deuxième conduite de contournement (40), passe dans le troisième dispositif de détente (17) où ledit fluide réfrigérant passe à basse pression, ledit fluide réfrigérant à basse pression circule ensuite dans le deuxième échangeur de chaleur bifluide (15) avant de rejoindre le fluide réfrigérant à basse pression issu du premier échangeur de chaleur (9) en amont du premier échangeur de chaleur interne (19),
▪ une deuxième partie du fluide réfrigérant passe dans le premier dispositif de détente (7) où ledit fluide réfrigérant passe à basse pression, ledit fluide réfrigérant à basse pression circule ensuite successivement dans le premier échangeur de chaleur (9), la première conduite de contournement (30) où il passe dans le deuxième échangeur de chaleur interne (19'), et ensuite dans le premier échangeur de chaleur interne (19) avant de retourner au compresseur (3),
∘ le fluide caloporteur en sortie du premier échangeur de chaleur bifluide (5) circule dans le quatrième échangeur de chaleur (64) de la deuxième conduite de circulation (50).

8. Procédé de fonctionnement d'un circuit de climatisation inversible indirect (1) selon la revendication 6, selon un mode de refroidissement secondaire strict dans lequel :
∘ le fluide réfrigérant circule dans le compresseur (3) où ledit fluide réfrigérant passe à haute pression et circule successivement dans le premier échangeur de chaleur bifluide (5), le premier échangeur de chaleur interne (19), le deuxième échangeur de chaleur interne (19'), le fluide réfrigérant passe ensuite dans la deuxième conduite de contournement (40), passe dans le troisième dispositif de détente (17) où ledit fluide réfrigérant passe à basse pression, ledit fluide réfrigérant à basse pression circule ensuite dans le deuxième échangeur de chaleur bifluide (15),
∘ le fluide caloporteur en sortie du premier échangeur de chaleur bifluide (5) circule dans le quatrième échangeur de chaleur (64) de la deuxième conduite de circulation (50).

9. Procédé de fonctionnement d'un circuit de climatisation inversible indirect (1) selon la revendication 6 en combinaison avec l'une des revendications 3 à 5, selon un mode pompe à chaleur secondaire parallèle dans lequel :
∘ le fluide réfrigérant circule dans le compresseur (3) où ledit fluide réfrigérant passe à haute pression et circule successivement dans le premier échangeur de chaleur bifluide (5), le premier échangeur de chaleur interne (19), le deuxième échangeur de chaleur interne (19') :
▪ une première partie du fluide réfrigérant passe par la deuxième conduite de contournement (40) en traversant le troisième dispositif de détente (17) où le fluide réfrigérant passe à basse pression, le deuxième échangeur de chaleur bifluide (15) avant de rejoindre le fluide réfrigérant issu du deuxième échangeur de chaleur en amont du premier échangeur de chaleur interne (19),
▪ une deuxième partie du fluide réfrigérant passe par le premier dispositif de détente (7) où ledit fluide réfrigérant passe à une pression intermédiaire, ledit fluide réfrigérant circule ensuite successivement dans le premier échangeur de chaleur (9), le deuxième dispositif de détente (11) où ledit fluide réfrigérant passe à basse pression, le deuxième échangeur de chaleur (13),
▪ le fluide réfrigérant à basse pression traverse ensuite le premier échangeur de chaleur interne (19) avant de retourner au compresseur (3),
∘ le fluide caloporteur en sortie du premier échangeur de chaleur bifluide (5) circule uniquement dans le troisième échangeur de chaleur (54) de la première conduite de circulation (50).

10. Procédé de fonctionnement d'un circuit de climatisation inversible indirect (1) selon la revendication 6 en combinaison avec la revendication 5, selon un mode pompe à chaleur secondaire strict dans lequel :
∘ le fluide réfrigérant circule dans le compresseur (3) où ledit fluide réfrigérant passe à haute pression et circule successivement dans le premier échangeur de chaleur bifluide (5), le premier échangeur de chaleur interne (19), le deuxième échangeur de chaleur interne (19'), le premier dispositif de détente (7) où ledit fluide réfrigérant passe à une pression intermédiaire, ledit fluide réfrigérant circule ensuite successivement dans le premier échangeur de chaleur (9), la première conduite de contournement (30), la conduite de dérivation (70), le troisième dispositif de détente (17) où ledit fluide réfrigérant passe à basse pression, le deuxième échangeur de chaleur bifluide (15), le fluide réfrigérant à basse pression traverse ensuite le premier échangeur de chaleur interne (19) avant de retourner au compresseur (3),
∘ le fluide caloporteur en sortie du premier échangeur de chaleur bifluide (5) circule uniquement dans le troisième échangeur de chaleur (54) de la première conduite de circulation (50).

## Patentansprüche

1. Indirekter Klimasteuerungskreislauf (1) für ein Kraftfahrzeug, aufweisend:
• eine erste Schleife für Kühlfluid (A), in welcher ein Kühlfluid strömt, wobei die erste Schleife für Kühlfluid (A) in der Durchströmungsrichtung des Kühlfluids Folgendes aufweist:
- einen Kompressor (3),
- einen ersten Bifluid-Wärmeaustauscher (5),
- eine erste Expansionsvorrichtung (7),
- einen ersten Wärmeaustauscher (9), der dazu bestimmt ist, von einem Innenluftstrom (100) des Kraftfahrzeugs durchströmt zu werden,
- eine zweite Expansionsvorrichtung (11),
- einen zweiten Wärmeaustauscher (13), der dazu bestimmt ist, von einem Außenluftstrom (200) des Kraftfahrzeugs durchströmt zu werden, und
- eine erste Umgehungsleitung (30) des zweiten Wärmeaustauschers (13), die ein erstes Absperrventil (33) aufweist,
• eine zweite Schleife für Wärmeübertragungsfluid (B), in welcher ein Wärmeübertragungsfluid strömt, und
• wobei der erste Bifluid-Wärmeaustauscher (5) zusammen auf der ersten Schleife für Kühlfluid (A) stromab des Kompressors (3) zwischen dem Kompressor (3) und der ersten Expansionsvorrichtung (7) und auf der zweiten Schleife für Wärmeübertragungsfluid (B) angeordnet ist, um die Wärmeaustausche zwischen der ersten Schleife für Kühlfluid (A) und der zweiten Schleife für Wärmeübertragungsfluid (B) zu gestatten, **dadurch gekennzeichnet, dass** die erste Schleife für Kühlfluid (A) ebenfalls Folgendes aufweist:
• einen ersten inneren Wärmeaustauscher (19), der einen Wärmeaustausch zwischen dem Kühlfluid unter Hochdruck am Ausgang des ersten Bifluid-Wärmeaustauschers (5) und dem Kühlfluid unter Niederdruck am Ausgang des zweiten Wärmeaustauschers (13) oder der ersten Umgehungsleitung (30) gestattet,
• einen zweiten inneren Wärmeaustauscher (19'), der einen Wärmeaustausch zwischen dem Kühlfluid unter Hochdruck am Ausgang des ersten inneren Wärmeaustauschers (19) und dem Kühlfluid unter Niederdruck, das in der ersten Umgehungsleitung (30) strömt, gestattet,
• eine zweite Umgehungsleitung (40) der ersten Expansionsvorrichtung (7) und des ersten Wärmeaustauschers (9), wobei die zweite Umgehungsleitung (40) eine dritte Expansionsvorrichtung (17) aufweist, die stromauf eines zweiten Bifluid-Wärmeaustauschers (15) angeordnet ist, der ebenfalls zusammen auf einer sekundären Wärmemanagementschleife angeordnet ist.

2. Indirekter umkehrbarer Klimasteuerungskreislauf (1) nach Anspruch 1, **dadurch gekennzeichnet, dass** die zweite Umgehungsleitung (40) einerseits stromauf der ersten Expansionsvorrichtung (7) und andererseits an die erste Umgehungsleitung (30) stromauf des ersten Absperrventils (33) und des zweiten inneren Wärmeaustauschers (19') angeschlossen ist.

3. Indirekter umkehrbarer Klimasteuerungskreislauf (1) nach Anspruch 1, **dadurch gekennzeichnet, dass** die zweite Umgehungsleitung (40) einerseits stromauf der ersten Expansionsvorrichtung (7) und andererseits an die erste Umgehungsleitung (30) stromauf des zweiten Absperrventils (19') und stromab des ersten Absperrventils (33) angeschlossen ist.

4. Indirekter umkehrbarer Klimasteuerungskreislauf (1) nach Anspruch 1, **dadurch gekennzeichnet, dass** die zweite Umgehungsleitung (40) einerseits stromauf der ersten Expansionsvorrichtung (7) und andererseits stromab der zweiten Expansionsvorrichtung (19') zwischen der zweiten Expansionsvorrichtung (19') und dem ersten inneren Wärmeaustauscher (19) angeschlossen ist.

5. Indirekter umkehrbarer Klimasteuerungskreislauf (1) nach dem vorhergehenden Anspruch, **dadurch gekennzeichnet, dass** die erste Schleife für Kühlfluid (A) eine Abzweigleitung (70) aufweist, die einerseits an die erste Umgehungsleitung (30) stromauf des Absperrventils (33) des zweiten Wärmeaustauschers (19') und andererseits stromauf der dritten Expansionsvorrichtung (17) zwischen der dritten Expansionsvorrichtung (17) und einem zweiten Absperrventil (73) angeschlossen ist, wobei die Abzweigleitung (70) ein drittes Absperrventil (74) aufweist.

6. Indirekter umkehrbarer Klimasteuerungskreislauf (1) nach einem der vorhergehenden Ansprüche, **dadurch gekennzeichnet, dass** die zweite Schleife für Wärmeübertragungsfluid (B) Folgendes aufweist:
- einen ersten Bifluid-Wärmeaustauscher (5),
- eine erste Strömungsleitung (50) für Wärmeübertragungsfluid, die einen dritten Wärmeaustauscher (54) aufweist, der dazu bestimmt ist, von einem Innenluftstrom (100) des Kraftfahrzeugs durchströmt zu werden, und einen ersten Verbindungspunkt (61), der stromab des ersten Bifluid-Wärmeaustauschers (5) angeordnet ist, und einen zweiten Verbindungspunkt (62), der stromauf des ersten Bifluid-Wärmeaustauschers (5) angeordnet ist, verbindet,
- eine zweite Strömungsleitung (60) für Wärmeübertragungsfluid, die einen vierten Wärmeaustauscher (64) aufweist, der dazu bestimmt ist, von einem Innenluftstrom (200) des Kraftfahrzeugs durchströmt zu werden, und den ersten Verbindungspunkt (61), der stromab des ersten Bifluid-Wärmeaustauschers (5) angeordnet ist, und den zweiten Verbindungspunkt (62), der stromauf des ersten Bifluid-Wärmeaustauschers (5) angeordnet ist, verbindet, und
- eine Pumpe (18), die stromab oder stromauf des ersten Bifluid-Wärmeaustauschers (5) zwischen dem ersten Verbindungspunkt (61) und dem zweiten Verbindungspunkt (62) angeordnet ist.

7. Betriebsverfahren eines indirekten umkehrbaren Klimasteuerungskreislaufs (1) nach Anspruch 6 gemäß einem parallelen sekundären Kühlmodus, wobei:
- das Kühlfluid in dem Kompressor (3) strömt, wo das Kühlfluid zu Hochdruck übergeht, und nacheinander im ersten Bifluid-Wärmeaustauscher (5), dem ersten inneren Wärmeaustauscher (19), dem zweiten inneren Wärmeaustauscher (19') strömt:
▪ ein erster Teil des Kühlfluids in die zweite Umgehungsleitung (40) eintritt, in die dritte Expansionsvorrichtung (17) eintritt, wo das Kühlfluid zu Niederdruck übergeht, das Kühlfluid unter Niederdruck anschließend im zweiten Bifluid-Wärmeaustauscher (15) strömt, bevor es mit dem Kühlfluid unter Niederdruck aus dem ersten Wärmeaustauscher (9) stromauf des ersten inneren Wärmeaustauschers (19) zusammentrifft,
▪ ein zweiter Teil des Kühlfluids in die erste Expansionsvorrichtung (7) eintritt, wo das Kühlfluid zu Niederdruck übergeht, das Kühlfluid unter Niederdruck anschließend nacheinander im ersten Bifluid-Wärmeaustauscher (9), der ersten Umgehungsleitung (30) strömt, wo es in den zweiten inneren Wärmeaustauscher (19') und anschließend in den ersten inneren Wärmeaustauscher (19) eintritt, bevor es zum Kompressor (3) zurückkehrt,
- das Wärmeübertragungsfluid am Ausgang des ersten Bifluid-Wärmeaustauschers (5) im vierten Wärmeaustauscher (64) der zweiten Strömungsleitung (50) strömt.

8. Betriebsverfahren eines indirekten umkehrbaren Klimasteuerungskreislaufs (1) nach Anspruch 6 gemäß einem strikten sekundären Kühlmodus, wobei:
- das Kühlfluid in dem Kompressor (3) strömt, wo das Kühlfluid zu Hochdruck übergeht, und nacheinander im ersten Bifluid-Wärmeaustauscher (5), dem ersten inneren Wärmeaustauscher (19), dem zweiten inneren Wärmeaustauscher (19') strömt, das Kühlfluid anschließend in die zweite Umgehungsleitung (40) eintritt, in die dritte Expansionsvorrichtung (17) eintritt, wo das Kühlfluid zu Niederdruck übergeht, das Kühlfluid unter Niederdruck anschließend im zweiten Bifluid-Wärmeaustauscher (15) strömt,
- das Wärmeübertragungsfluid am Ausgang des ersten Bifluid-Wärmeaustauschers (5) im vierten Wärmeaustauscher (64) der zweiten Strömungsleitung (50) strömt.

9. Betriebsverfahren eines indirekten umkehrbaren Klimasteuerungskreislaufs (1) nach Anspruch 6 in Kombination mit einem der Ansprüche 3 bis 5 gemäß einem parallelen sekundären Wärmepumpenmodus, wobei:
- das Kühlfluid in dem Kompressor (3) strömt, wo das Kühlfluid zu Hochdruck übergeht, und nacheinander im ersten Bifluid-Wärmeaustauscher (5), dem ersten inneren Wärmeaustauscher (19), dem zweiten inneren Wärmeaustauscher (19') strömt:
▪ ein erster Teil des Kühlfluids durch die zweite Umgehungsleitung (40) hindurchtritt, wobei es die dritte Expansionsvorrichtung (17), wo das Kühlfluid zu Niederdruck übergeht, den zweiten Bifluid-Wärmeaustauscher (15) durchströmt, bevor es mit dem Kühlfluid aus dem zweiten Wärmeaustauscher stromauf des ersten inneren Wärmeaustauschers (19) zusammentrifft,
▪ ein zweiter Teil des Kühlfluids durch die erste Expansionsvorrichtung (7) hindurchtritt, wo das Kühlfluid zu einem Zwischendruck übergeht, das Kühlfluid anschließend nacheinander im ersten Wärmeaustauscher (9), der zweiten Expansionsvorrichtung (11), wo das Kühlfluid zu Niederdruck übergeht, dem zweiten Wärmeaustauscher (13) strömt.
▪ das Kühlfluid unter Niederdruck anschließend den ersten inneren Wärmeaustauscher (19) durchströmt, bevor es zum Kompressor (3) zurückkehrt,
- das Wärmeübertragungsfluid am Ausgang des ersten Bifluid-Wärmeaustauschers (5) nur im dritten Wärmeaustauscher (54) der ersten Strömungsleitung (50) strömt.

10. Betriebsverfahren eines indirekten umkehrbaren Klimasteuerungskreislaufs (1) nach Anspruch 6 in Kombination mit Anspruch 5 gemäß einem strikten sekundären Wärmepumpenmodus, wobei:
- das Kühlfluid in dem Kompressor (3) strömt, wo das Kühlfluid zu Hochdruck übergeht, und nacheinander im ersten Bifluid-Wärmeaustauscher (5), dem ersten inneren Wärmeaustauscher (19), dem zweiten inneren Wärmeaustauscher (19'), der ersten Expansionsvorrichtung (7), wo das Kühlfluid zu einem Zwischendruck übergeht, strömt, das Kühlfluid anschließend nacheinander im ersten Wärmeaustauscher (9), der ersten Umgehungsleitung (30), der Abzweigleitung (70), der dritten Expansionsvorrichtung (17), wo das Kühlfluid zu Niederdruck übergeht, dem zweiten Bifluid-Wärmeaustauscher (15) strömt, das Kühlfluid unter Niederdruck anschließend den ersten inneren Wärmeaustauscher (19) durchströmt, bevor es zum Kompressor (3) zurückkehrt,
- das Wärmeübertragungsfluid am Ausgang des ersten Bifluid-Wärmeaustauschers (5) nur im dritten Wärmeaustauscher (54) der ersten Strömungsleitung (50) strömt.

## Claims

1. Indirect air-conditioning circuit (1) for a motor vehicle comprising:
• a first refrigerant fluid loop (A) in which a refrigerant fluid flows, said first refrigerant fluid loop (A) comprising in the direction of flow of the refrigerant fluid:
∘ a compressor (3),
∘ a first dual-fluid heat exchanger (5),
∘ a first expansion device (7),
∘ a first heat exchanger (9) being intended to be passed through by an air flow inside (100) the motor vehicle,
∘ a second expansion device (11),
∘ a second heat exchanger (13) being intended to be passed through by an air flow outside (200) the motor vehicle, and
∘ a first bypass duct (30) of the second heat exchanger (13) comprising a first stop valve (33),
• a second heat-transfer fluid loop (B) in which a heat-transfer fluid flows, and
• the first dual-fluid heat exchanger (5) being jointly arranged on the first refrigerant fluid loop (A) downstream of the compressor (3), between said compressor (3) and the first expansion device (7), and on the second heat-transfer fluid loop (B), so as to allow heat exchanges between the first refrigerant fluid loop (A) and the second heat-transfer fluid loop (B), **characterized in that** said first refrigerant fluid loop (A) also comprises
• a first internal heat exchanger (19), allowing heat exchange between the high-pressure refrigerant fluid at the outlet of the first dual-fluid heat exchanger (5) and the low-pressure refrigerant fluid at the outlet of the second heat exchanger (13) or of the first bypass duct (30),
• a second internal heat exchanger (19') allowing heat exchange between the high-pressure refrigerant fluid at the outlet of the first internal heat exchanger (19) and the low-pressure refrigerant fluid flowing in the first bypass duct (30),
• a second bypass duct (40) of the first expansion device (7) and of the first heat exchanger (9), said second bypass duct (40) comprising a third expansion device (17) arranged upstream of a second dual-fluid heat exchanger (15) also arranged jointly on a secondary thermal management loop.

2. Indirect reversible air-conditioning circuit (1) according to Claim 1, **characterized in that** the second bypass duct (40) is connected on the one hand upstream of the first expansion device (7) and on the other hand onto the first bypass duct (30), upstream of the first stop valve (33) and of the second internal heat exchanger (19').

3. Indirect reversible air-conditioning circuit (1) according to Claim 1, **characterized in that** the second bypass duct (40) is connected on the one hand upstream of the first expansion device (7) and on the other hand onto the first bypass duct (30), upstream of the second heat exchanger (19') and downstream of the first stop valve (33).

4. Indirect reversible air-conditioning circuit (1) according to Claim 1, **characterized in that** the second bypass duct (40) is connected on the one hand upstream of the first expansion device (7) and on the other hand downstream of the second expansion device (19'), between said second expansion device (19') and the first internal heat exchanger (19).

5. Indirect reversible air-conditioning circuit (1) according to Claim 1, **characterized in that** the first refrigerant fluid loop (A) comprises a branch duct (70) connected on the one hand onto the first bypass duct (30), upstream of the stop valve (33) of the second heat exchanger (19') and on the other hand upstream of the third expansion device (17) between said third expansion device (17) and a second stop valve (73), said branch duct (70) comprising a third stop valve (74).

6. Indirect reversible air-conditioning circuit (1) according to one of the preceding claims, **characterized in that** the second heat-transfer fluid loop (B) comprises:
∘ the first dual-fluid heat exchanger (5),
∘ a first heat-transfer fluid flow duct (50) comprising a third heat exchanger (54) intended to be passed through by an air flow inside (100) the motor vehicle, and connecting a first junction point (61) arranged downstream of the first dual-fluid heat exchanger (5) and a second junction point (62) arranged upstream of said first dual-fluid heat exchanger (5),
∘ a second heat-transfer fluid flow duct (60) comprising a fourth heat exchanger (64) intended to be passed through by an air flow outside (200) the motor vehicle, and connecting the first junction point (61) arranged downstream of the first dual-fluid heat exchanger (5) and the second junction point (62) arranged upstream of said first dual-fluid heat exchanger (5), and
∘ a pump (18) arranged downstream or upstream of the first dual-fluid heat exchanger (5), between the first junction point (61) and the second junction point (62).

7. Method of operating an indirect reversible air-conditioning circuit (1) according to Claim 6, according to a parallel secondary cooling mode wherein:
∘ the refrigerant fluid flows into the compressor (3) where said refrigerant fluid passes to high pressure and flows successively into the first dual-fluid heat exchanger (5), the first internal heat exchanger (19), and the second internal heat exchanger (19'):
▪ a first portion of the refrigerant fluid passes into the second bypass duct (40), passes into the third expansion device (17) where said refrigerant fluid passes to low pressure, said low-pressure refrigerant fluid then flows into the second dual-fluid heat exchanger (15) before meeting up with the low-pressure refrigerant fluid from the first heat exchanger (9) upstream of the first internal heat exchanger (19),
▪ a second portion of the refrigerant fluid passes into the first expansion device (7) where said refrigerant fluid passes to low pressure, said low-pressure refrigerant fluid then flows successively into the first heat exchanger (9), the first bypass duct (30) where it passes into the second internal heat exchanger (19'), and then into the first internal heat exchanger (19) before returning to the compressor (3),
∘ the heat-transfer fluid at the outlet of the first dual-fluid heat exchanger (5) flows into the fourth heat exchanger (64) of the second flow duct (50).

8. Method of operating an indirect reversible air-conditioning circuit (1) according to Claim 6, according to a strict secondary cooling mode wherein:
∘ the refrigerant fluid flows into the compressor (3) where said refrigerant fluid passes to high pressure and flows successively into the first dual-fluid heat exchanger (5), the first internal heat exchanger (19), the second internal heat exchanger (19'), the refrigerant fluid then passes into the second bypass duct (40), passes into the third expansion device (17) where said refrigerant fluid passes to low pressure, said low-pressure refrigerant fluid then flows into the second dual-fluid heat exchanger (15),
∘ the heat-transfer fluid at the outlet of the first dual-fluid heat exchanger (5) flows into the fourth heat exchanger (64) of the second flow duct (50).

9. Method of operating an indirect reversible air-conditioning circuit (1) according to Claim 6 in combination with one of Claims 3 to 5, according to a parallel secondary heat pump mode wherein:
∘ the refrigerant fluid flows into the compressor (3) where said refrigerant fluid passes to high pressure and flows successively into the first dual-fluid heat exchanger (5), the first internal heat exchanger (19), and the second internal heat exchanger (19'):
▪ a first portion of the refrigerant fluid passes through the second bypass duct (40) by passing through the third expansion device (17) where the refrigerant fluid passes to low pressure, the second dual-fluid heat exchanger (15) before meeting up with the refrigerant fluid from the second heat exchanger upstream of the first internal heat exchanger (19),
▪ a second portion of the refrigerant fluid passes through the first expansion device (7) where said refrigerant fluid passes to an intermediate pressure, said refrigerant fluid then flows successively into the first heat exchanger (9), the second expansion device (11) where said refrigerant fluid passes to low pressure, and the second heat exchanger (13),
▪ the low-pressure refrigerant fluid then passes through the first internal heat exchanger (19) before returning to the compressor (3),
∘ the heat-transfer fluid at the outlet of the first dual-fluid heat exchanger (5) only flows into the third heat exchanger (54) of the first flow duct (50).

10. Method of operating an indirect reversible air-conditioning circuit (1) according to Claim 6 in combination with Claim 5, according to a strict secondary heat pump mode wherein:
∘ the refrigerant fluid flows into the compressor (3) where said refrigerant fluid passes to high pressure and flows successively into the first dual-fluid heat exchanger (5), the first internal heat exchanger (19), the second internal heat exchanger (19'), the first expansion device (7) where said refrigerant fluid passes to an intermediate pressure, said refrigerant fluid then flows successively into the first heat exchanger (9), the first bypass duct (30), the branch duct (70), the third expansion device (17) where said refrigerant fluid passes to low pressure, the second dual-fluid heat exchanger (15), the low-pressure refrigerant fluid then passes through the first internal heat exchanger (19) before returning to the compressor (3),
∘ the heat-transfer fluid at the outlet of the first dual-fluid heat exchanger (5) only flows into the third heat exchanger (54) of the first flow duct (50).
